# EUROPEAN PATENT APPLICATION

(11) **EP 4 734 648 A1**
(43) Date of publication of application: **29.04.2026**
(21) Application number: 24825671.1
(22) Date of filing: 29.05.2024
(51) Int. Cl.: H04W 74/0816, H04W 72/54, H04W 72/566, H04W 84/12

(54) **TERMINAL, ACCESS POINT, AND COMMUNICATION METHOD**

(30) Priority: 22.06.2023 JP 2023102501
(71) Applicant: Panasonic Intellectual Property Corporation of America, Torrance, CA 90504 (US)
(72) Inventor: IWAI, Takashi, Kadoma-shi, Osaka 571-0057 (JP); URABE, Yoshio, Kadoma-shi, Osaka 571-0057 (JP); TAKATA, Tomofumi, Kadoma-shi, Osaka 571-0057 (JP); MOTOZUKA, Hiroyuki, Kadoma-shi, Osaka 571-0057 (JP); MINOTANI, Jun, Kadoma-shi, Osaka 571-0057 (JP)
(74) Representative: Grünecker Patent- und Rechtsanwälte PartG mbB
(86) International application number: PCT/JP2024/019666
(87) International publication number: WO 2024/262264

(57) **Abstract**

This terminal is provided with: a control circuit that determines, on the basis of a prescribed rule, a carrier sensing time for performing carrier sensing in a prescribed time interval; and a transmission circuit that transmits a prescribed type of signal on the basis of the result of the carrier sensing.

## Description

### Technical Field

The present disclosure relates to a terminal, an access point, and a communication method.

### Background Art

As a successor to IEEE 802.11ax (hereinafter, referred to as "11ax"), which is a standard of IEEE 802.11, the Institute of Electrical and Electronics Engineers (IEEE) is proceeding with the development of technical specifications for IEEE 802.11be (hereinafter, referred to as "11be"). 11ax is also referred to as "High Efficiency (HE)," and 11be is also referred to as "Extremely High Throughput (EHT)." In addition, in an Ultra High Reliability (UHR) Study Group (SG), discussions on requirements specification for a successor standard to 11be (hereinafter, referred to as "UHR") are in progress.

### Citation List

### Non-Patent Literature

NPL 1
   IEEE 802.11-23/0092r0, Preemption for Low Latency Application
NPL 2
   IEEE 802.11-23/0378r0, Enhanced Scheduling Method for Low Latency Traffic
NPL 3
   IEEE P802.11be/D3.0

### Summary of Invention

However, a method for controlling signal transmission in radio communication such as a wireless LAN has not been sufficiently studied.

A non-limiting embodiment of the present disclosure facilitates providing a terminal, an access point, and a communication method each capable of improving the efficiency of transmission control in radio communication.

A terminal according to an embodiment of the present disclosure includes: control circuitry, which, in operation, determines a carrier sensing time for performing carrier sensing in a predetermined time interval, based on a predetermined rule; and transmission circuitry, which, in operation, transmits a signal of a predetermined type based on a result of the carrier sensing.

It should be noted that general or specific embodiments may be implemented as a system, an apparatus, a method, an integrated circuit, a computer program, a storage medium, or any selective combination thereof.

According to an embodiment of the present disclosure, it is possible to improve the efficiency of transmission control in radio communication, for example.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### Brief Description of Drawings

FIG. 1 is a block diagram illustrating an example of a part of a configuration of an access point (AP);
FIG. 2 is a block diagram illustrating an example of a part of a configuration of a terminal;
FIG. 3 is a diagram illustrating an example of a sequence of transmission of a plurality of PHY protocol data units (PPDUs);
FIG. 4 is another diagram illustrating the example of the sequence of transmission of a plurality of PPDUs;
FIG. 5 is a block diagram illustrating an exemplary configuration of the AP;
FIG. 6 is a block diagram illustrating an exemplary configuration of the terminal;
FIG. 7 is a diagram illustrating an example of preemption control information;
FIG. 8 is a diagram illustrating an exemplary sequence of indication of preemption control information;
FIG. 9 is another diagram illustrating the example of preemption control information;
FIG. 10 is another diagram illustrating the exemplary sequence of indication of preemption control information;
FIG. 11 is still another diagram illustrating the exemplary sequence of indication of preemption control information;
FIG. 12 is still another diagram illustrating the example of preemption control information;
FIG. 13 is still another diagram illustrating the example of preemption control information;
FIG. 14 is still another diagram illustrating the exemplary sequence of indication of preemption control information;
FIG. 15 is a diagram illustrating an example of a User Info field of a Multi-User (MU)-Request to Send (RTS) Transmission Opportunity (TXOP) sharing (TXS) Trigger frame;
FIG. 16 is a diagram illustrating an example of preemption control information;
FIG. 17 is a diagram illustrating an exemplary sequence of transmission of a plurality of PPDUs;
FIG. 18 is a diagram illustrating an exemplary sequence in a Restricted-Target Wake Time Service Period (R-TWT SP);
FIG. 19 is a diagram illustrating an example of a Request Type field format of a Broadcast TWT Parameter Set field;
FIG. 20 is a diagram illustrating an example of a TWT operation;
FIG. 21 is a diagram illustrating an exemplary sequence of transmission of a plurality of PPDUs;
FIG. 22 is a diagram illustrating an example of preemption by random access; and
FIG. 23 is a diagram illustrating an example of preemption by a Null data packet (NDP) Feedback Report Poll (NFRP).

### Description of Embodiments

Hereinafter, embodiments of the present disclosure will be described in detail with reference to the accompanying drawings.

In UHR, a need for further reduction of delay (low latency) is proposed (for example, see NPL 1 or 2). Furthermore, it has been proposed that UHR supports non-periodic, unpredictable, and dynamically changing traffic that requires low latency (for example, also referred to as Event-based low latency traffic) (see, for example, NPL 3).

Hereinafter, traffic for which low latency is required is referred to as "low latency (LL) traffic."

For example, NPL 2 discloses that, in a Transmission Opportunity (TXOP) acquired by an Access Point (AP, also referred to as "AP STA" or "base station"), transmitting a PHY protocol data unit (PPDU, also referred to as a packet) with long time duration may increase delay of a terminal with LL traffic (STA: station, also referred to as "non-AP STA"). In NPL 2, as a measure against the increase in delay, it is proposed to perform divided transmission of a PPDU with limited time duration (for example, short time duration) at a predetermined time interval.

Hereinafter, a non-transmission time (predetermined time interval) immediately before a PPDU scheduled to be transmitted within the TXOP by AP is referred to as a "PPDU transmission gap."

The terminal having LL traffic can reduce delay by performing interrupt transmission (hereinafter, referred to as "preemption") of LL traffic with respect to a PPDU scheduled to be transmitted, in a PPDU transmission gap.

For example, in a case where a plurality of terminals having LL traffic is present, uplink signals between the plurality of terminals may collide with each other, and AP may not be capable of receiving all the uplink signals, which may increase delay.

In a non-limiting example of the present disclosure, an exemplary method for reducing delay of LL traffic by reducing collisions of uplink signals between a plurality of terminals having LL traffic will be described. For example, in a non-limiting example of the present disclosure, a terminal with LL traffic is allowed to perform uplink transmission with carrier sensing for a predetermined time without backoff in a PPDU transmission gap. This can reduce collision of uplink signals even when a plurality of terminals with LL traffic is present.

### (Embodiment 1)

In the present embodiment, for example, AP configures a predetermined PPDU transmission gap within the acquired TXOP and transmits a plurality of PPDUs. In addition, AP allows, for example, a terminal with LL traffic to transmit (preempt) an uplink signal having LL traffic in the PPDU transmission gap without backoff. In addition, in the present embodiment, collision of uplink signals between a plurality of terminals is reduced by varying carrier sensing times (or transmission timings) performed immediately before respective terminals transmit uplink signals.

### [Configuration of Radio Communication System]

A radio communication system according to the present embodiment may include, for example, AP 100 and terminal 200. In the radio communication system, two or more terminals 200 may be present.

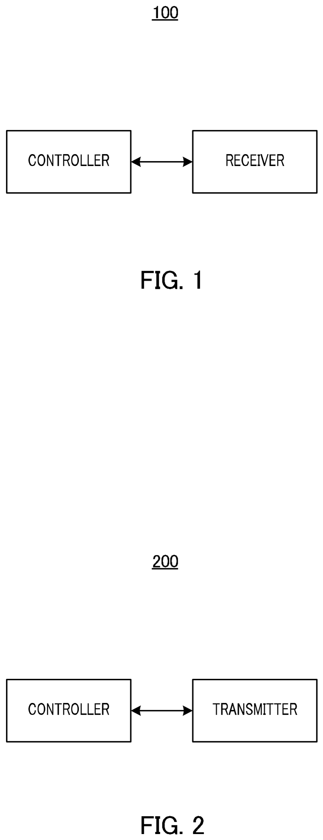

FIG. 1 is a block diagram illustrating a configuration example of a part of AP 100 according to the present disclosure. In AP 100 illustrated in FIG. 1, a controller (for example, corresponding to control circuitry) determines a carrier sensing time during which carrier sensing is performed in a predetermined time interval (for example, PPDU transmission gap), based on a predetermined rule. A receiver (for example, corresponding to reception circuitry) receives a signal of a predetermined type (for example, LL traffic) that has been transmitted according to the result of the carrier sensing. In addition, AP 100 may include a transmitter (for example, corresponding to transmission circuitry). The transmitter may transmit a DL PPDU (for example, downlink transmission data) for each predetermined time interval, and may transmit preemption control information on LL traffic determined by the controller (for example, information on carrier sensing time and/or predetermined time interval) by including the preemption control information in a control frame (for example, RTS frame, control frame aggregated in DL PPDU, or the like) or a management frame.

FIG. 2 is a block diagram illustrating a configuration example of a part of terminal 200 according to the present disclosure. In terminal 200 illustrated in FIG. 2, a controller (for example, corresponding to control circuitry) determines a carrier sensing time during which carrier sensing is performed in a predetermined time interval (for example, PPDU transmission gap), based on a predetermined rule. The transmitter (for example, corresponding to transmission circuitry) transmits a signal of a predetermined type (for example, LL traffic) based on the result of the carrier sensing. In addition, terminal 200 may include a receiver (for example, corresponding to reception circuitry). The receiver may receive a control frame (for example, RTS frame, control frame aggregated in DL PPDU, or the like) or a management frame transmitted by AP 100, and acquire preemption control information (for example, information on predetermined time interval (for example, PPDU transmission gap) and/or indication information on carrier sensing time) necessary for determining the carrier sensing time.

AP 100 allows, for example, interrupt transmission (preemption) of the uplink signal limited to a predetermined traffic type (for example, LL traffic), in the PPDU transmission gap within the TXOP acquired by AP 100.

Terminal 200 receives, for example, a downlink PPDU (DL PPDU) transmitted from AP 100. Terminal 200 may then perform preemption based on the preemption control information indicated by any one of a preamble, a medium access control (MAC) header, or a Trigger frame included in the received PPDU, or a combination thereof. For example, terminal 200 has a traffic type for which preemption is allowed, and transmits (preempts) an uplink signal to AP 100 in the PPDU transmission gap interval in a case where the carrier sensing result for a predetermined time indicates idle.

The preemption control information may herein include, for example, information on at least one of the time duration of the TXOP acquired by AP 100, the presence or absence of a response signal (for example, ACK or Block Ack) immediately after the PPDU, a PPDU transmission gap, a traffic type for which preemption is allowed, and/or a carrier sensing time of terminal 200 (for example, carrier sensing time to be configured or candidates for a configurable carrier sensing time).

On the other hand, in a case where terminal 200 does not have the traffic type for which preemption is allowed or the carrier sensing result indicates busy, terminal 200 determines that the uplink signal is not transmitted (preemption is not possible).

Note that LL traffic may be a type for which low latency is required, and is also referred to as, for example, low latency traffic, latency sensitive traffic, or Event-based low latency traffic.

As an example, an operation example (sequence) of configuring a predetermined PPDU transmission gap within the TXOP acquired by AP 100 and transmitting a plurality of PPDUs (hereinafter, referred to as multiple PPDU transmission) will be described.

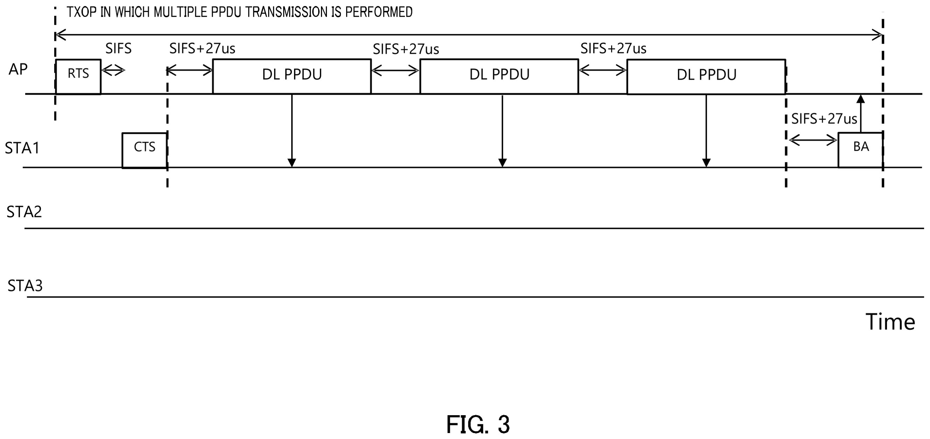

FIG. 3 illustrates an exemplary sequence of multiple PPDU transmission in a case where terminal 200 does not have the traffic type for which preemption is allowed.

As illustrated in FIG. 3, AP 100 configures a time corresponding to a PPDU transmission gap (for example, time interval from when AP 100 transmits a DL PPDU to when AP 100 transmits the next DL PPDU within TXOP) to "short interframe space (SIFS) + 27 µs." In addition, AP 100 transmits three DL PPDUs to terminal 200 (STA1 in FIG. 3) in the TXOP. In FIG. 3, the ACK for the DL PPDU is controlled to be collectively indicated at the last timing of the TXOP.

In FIG. 3, AP configures the PPDU transmission gap (for example, SIFS + 27 µs) before the transmission of each DL PPDU, but in another example, the PPDU transmission gap of a first DL PPDU (PPDU immediately after CTS reception) may be configured to SIFS, and the PPDU transmission gaps of a second and subsequent DL PPDUs may be configured to SIFS + 27 µs. This avoids interrupt transmission after the CTS frame for data transmission other than LL traffic when another STA (for example, STA2, STA3) fails to receive (for example, fails to decode) an RTS frame, for example.

In FIG. 3, AP 100 may indicate, to terminal 200, the preemption control information including the information on the PPDU transmission gap, for example, by including the information in a request to send (RTS). The signal used for the indication of the preemption control information is not limited to the RTS, and may be, for example, a Trigger frame such as a Multi-user (MU)-RTS Trigger frame or an MU-RTS TXOP sharing (TXS) Trigger frame. In addition, the preemption control information may be included in, for example, a preamble (for example, U-SIG field or EHT-SIG field) included in a DL PPDU. Furthermore, the preemption control information may be included in, for example, a MAC header (for example, A-Control subfield of HT control field) or a beacon (for example, Target Wake Time (TWT) element). Examples of the preemption control information will be described below.

For example, in FIG. 3, AP 100 performs carrier sensing in the PPDU transmission gap before transmitting a DL PPDU, transmits the DL PPDU when the carrier sensing result indicates an idle state, and stops the transmission of the DL PPDU when the carrier sensing result indicates busy.

In FIG. 3, a plurality of (for example, all) terminals 200 (STA1, STA2, STA3 in FIG. 3) connected to AP 100 do not have the traffic type for which preemption is allowed (for example, LL traffic), and thus do not perform preemption in the PPDU transmission gap.

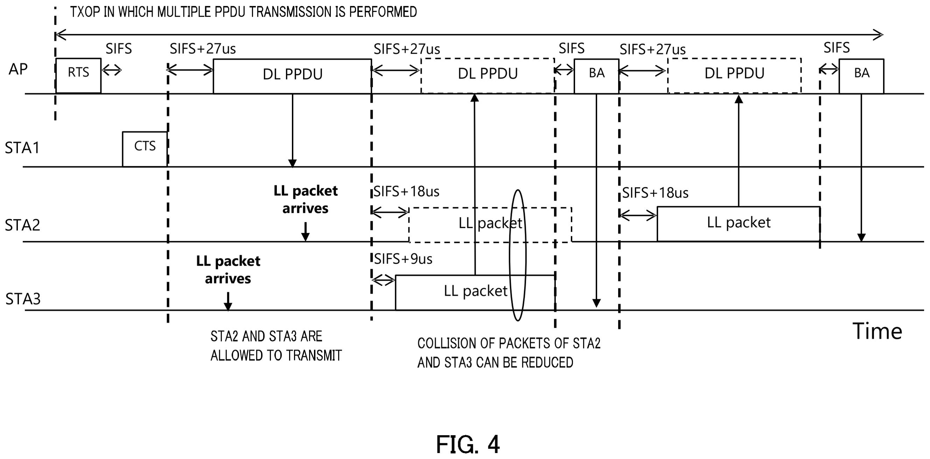

FIG. 4 illustrates an exemplary sequence of multiple PPDU transmission in a case where terminals 200 have the traffic type for which preemption is allowed.

As illustrated in FIG. 4, AP 100 configures a time corresponding to a PPDU transmission gap (for example, time interval from when AP 100 transmits a DL PPDU to when AP 100 transmits the next DL PPDU within the TXOP) to "short interframe space (SIFS) + 27 µs." In addition, AP 100 schedules transmission of three DL PPDUs to STA1 within the TXOP. In FIG. 4, the ACK for the DL PPDU is controlled to be collectively indicated at the last timing of the TXOP (not illustrated). Furthermore, as in the example of FIG. 3, the PPDU transmission gap before a first DL PPDU may be configured to SIFS.

In FIG 4, a plurality of terminals 200 (STA2 and STA3 in FIG. 4) connecting to AP 100 (AP in FIG 4) have the traffic type for which preemption is allowed (for example, LL traffic, also referred to as LL packet, for example). Thus, STA2 and STA3 attempt preemption in the PPDU transmission gap intervals.

For example, STA2 and STA3 perform carrier sensing (for example, carrier sensing time) determined by the predetermined rule, perform interrupt transmission (preemption) of the uplink signals with LL traffic when the result of the carrier sensing indicates an idle state, and do not perform interrupt transmission (preemption) of the uplink signals when the result of the carrier sensing indicates busy.

For example, according to the predetermined rule, the carrier sensing time of each of STA2 and STA3 is configured to be shorter than, for example, the PPDU transmission gap (for example, time duration until AP 100 transmits the next DL PPDU). In addition, for example, according to the predetermined rule, the carrier sensing times may be different between the plurality of terminals 200 that are allowed to transmit (for example, preempt) uplink signals. In the example of FIG. 4, the carrier sensing time of STA2 is configured to SIFS + 18 µs, and the carrier sensing time of STA3 is configured to SIFS + 9 µs.

In this case, as illustrated in FIG. 4, the preemption of STA3 having a shorter carrier sensing time than AP 100 (SIFS + 27 µs) and STA2 (SIFS + 18 µs) is prioritized over STA2 and AP 100, and thus STA3 can transmit the uplink signal with LL traffic to AP 100. In addition, in the next PPDU transmission gap illustrated in the example of FIG. 4, the preemption of STA2 having a shorter carrier sensing time than AP 100 (SIFS + 27 µs) is prioritized over AP 100, and thus STA2 can transmit the uplink signal with LL traffic to AP 100. This allows STA2 and STA3 to transmit the uplink signals with LL traffic to AP 100 while avoiding the collision of the uplink signals between STA2 and STA3.

As described above, according to the present embodiment, the collision of the uplink signals between terminals 200 can be reduced by varying the carrier sensing times of terminals 200 even in a case where a plurality of terminals 200 with LL traffic is present.

### [Configuration Example of AP 100]

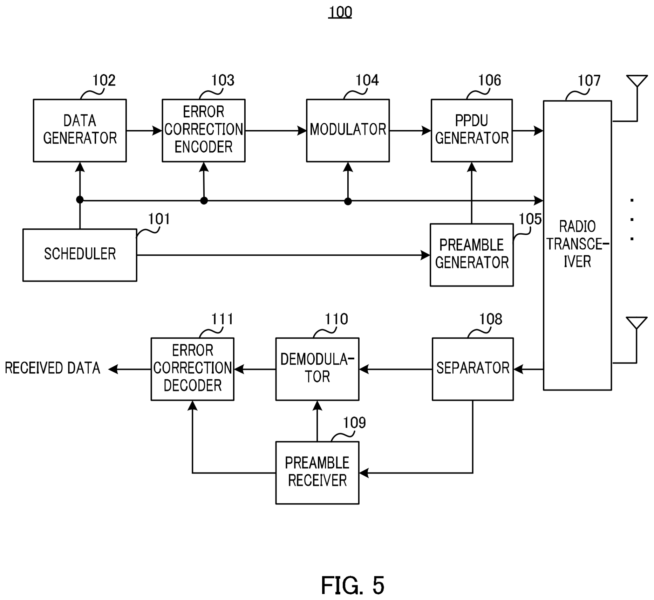

FIG. 5 is a block diagram illustrating a configuration example of AP 100.

AP 100 notifies a plurality of terminals 200 of preemption control information. In addition, AP 100 allows preemption from terminal 200 limited to one or some of traffic types (for example, LL traffic) in a PPDU transmission gap within the TXOP acquired by AP 100.

AP 100 illustrated in FIG. 5 may include, for example, scheduler 101, data generator 102, error correction encoder 103, modulator 104, preamble generator 105, PPDU generator 106, radio transceiver 107, separator 108, preamble receiver 109, demodulator 110, and error correction decoder 111.

Note that at least one of scheduler 101, data generator 102, error correction encoder 103, modulator 104, preamble generator 105, PPDU generator 106, separator 108, preamble receiver 109, demodulator 110, and/or error correction decoder 111 illustrated in FIG. 5 may be included in the controller illustrated in FIG. 1, and radio transceiver 107 illustrated in FIG. 5 may be included in the receiver illustrated in FIG. 1.

In FIG. 5, scheduler 101 may perform, for example, scheduling for terminal 200. For example, scheduler 101 may perform scheduling of multiple PPDU transmission within the TXOP for a transmission destination terminal (which may be, for example, terminal 200 that supports preemption or an existing terminal that does not support preemption). For example, scheduler 101 determines scheduling information for transmitting a plurality of downlink signals (for example, DL PPDUs) to the transmission destination terminal within the TXOP, based on reception quality information, a transmission buffer state, and/or the like fed back from each terminal.

The scheduling information may include, for example, information on a radio resource (for example, at least one of a time duration of the TXOP, a transmission bandwidth, a signal duration of each PPDU, and/or the number of PPDUs transmitted within the TXOP) assigned to the transmission destination terminal and an MCS applied to the downlink PPDU.

In addition, the scheduling information may include, for example, preemption control information to be indicated to a plurality of terminals 200 that may perform preemption. The preemption control information may include, for example, a plurality of candidates for a carrier sensing time used for the preemption of terminal 200. Each of the candidates for the carrier sensing time is configured to a time duration shorter than a PPDU transmission gap time (for example, SIFS + 27 µs in FIG. 4,) corresponding to a non-transmission interval before the PPDU transmission performed by AP 100 within the TXOP (for example, interval between adjacent PPDUs). For example, in the case of FIG. 4, time durations including SIFS + 9 µs and SIFS + 18 µs may be configured as the candidates for the carrier sensing time of terminal 200. Note that the candidate for the carrier sensing time may be indicated in advance to the connection terminal from AP 100 by a beacon or the like, or may be defined in advance in the specification.

Scheduler 101 outputs the determined scheduling information to data generator 102, error correction encoder 103, modulator 104, preamble generator 105, and radio transceiver 107.

Data generator 102 generates data (downlink data) for the transmission destination terminal. Data generator 102 outputs the generated data to error correction encoder 103.

In a case where the preemption control information is indicated to terminal 200 by a Trigger frame, data generator 102 generates the Trigger frame (for example, MU-RTS TXS Trigger frame or the like), and outputs the Trigger frame to error correction encoder 103 together with the data for the transmission destination terminal. In addition, in a case where the preemption control information is indicated to terminal 200 by a MAC header, data generator 102 generates data in which the MAC header including the preemption control information is added to the data for the transmission destination terminal, and outputs the data to error correction encoder 103 together with the data for the transmission destination terminal.

Error correction encoder 103 error-corrects and encodes the data signal input from data generator 102, and outputs the encoded signal to modulator 104. The encoding rate of the data signal in error correction encoder 103 may be determined based on, for example, the scheduling information input from scheduler 101.

Modulator 104 modulates, for example, the signal input from error correction encoder 103, and outputs the modulated signal to PPDU generator 106. The modulation scheme applied in modulator 104 may be determined based on, for example, the scheduling information input from scheduler 101.

In addition, in a case where the modulation signal is an Orthogonal Frequency Division Multiplexing (OFDM) signal, AP 100 may form the OFDM signal by mapping the modulated signal to a predetermined frequency resource, then performing Inverse Discrete Fourier Transform (IDFT) processing, and adding a cyclic prefix (CP).

Preamble generator 105 generates a preamble to be added to the data for the transmission destination terminal based on the scheduling information from scheduler 101. The preamble includes, for example, information used by the transmission destination terminal to receive and decode the data. Preamble generator 105 outputs the generated preamble signal to PPDU generator 106.

PPDU generator 106 generates one PPDU signal obtained by time-multiplexing the preamble signal from preamble generator 105 and the modulation signal from modulator 104 (for example, the preamble signal and the modulation signal (OFDM signal) are time-multiplexed in this order), and outputs the PPDU signal to radio transceiver 107.

Radio transceiver 107 performs radio transmission processing such as D/A conversion and up-conversion to a carrier frequency on the PPDU signal input from PPDU generator 106, and transmits the signal after the radio transmission processing via the antenna. For example, radio transceiver 107 may determine a transmission timing of the PPDU based on the information (for example, preemption control information) input from scheduler 101, perform carrier sensing immediately before the transmission timing, and transmit the signal from the antenna in accordance with the determined transmission timing when the carrier sensing result indicates an idle state.

In addition, radio transceiver 107 receives a signal via the antenna, performs radio reception processing such as down-conversion to a baseband and A/D conversion on the received signal, and outputs the signal after the radio reception processing to separator 108.

Separator 108 separates, for example, the signal (PPDU) input from radio transceiver 107 into a preamble signal and a data signal, outputs the preamble signal to preamble receiver 109, and outputs the data signal to demodulator 110.

Preamble receiver 109 demodulates and decodes the preamble signal from separator 108, indicates decoding of the data to demodulator 110 and error correction decoder 111 in the case of a signal for AP 100, and outputs control information (for example, MCS and/or the like) to be used for the decoding to demodulator 110 and error correction decoder 111.

Demodulator 110 performs demodulation processing on the reception data input from separator 108, and outputs the demodulated signal to error correction decoder 111. Note that the modulation scheme applied in demodulator 110 may be determined based on, for example, the control information input from preamble receiver 109.

In addition, in a case where the signal input to demodulator 110 is an OFDM signal, AP 100 may perform CP removal processing and DFT processing on the OFDM signal.

Error correction decoder 111 decodes, for example, the demodulated signal input from demodulator 110, and outputs the decoded signal as a received data signal. Note that the encoding rate applied in error correction decoder 111 may be determined based on, for example, the control information input from preamble receiver 109. In addition, the received data signal may include, for example, an ACK response (for example, Block Ack (BA)) from the transmission destination terminal or LL traffic from terminal 200.

### [Configuration Example of Terminal 200]

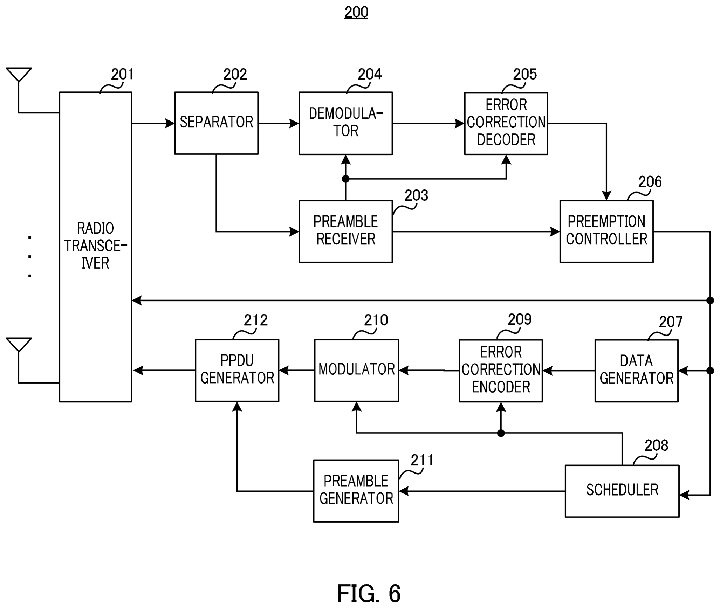

FIG. 6 is a block diagram illustrating a configuration example of terminal 200.

Terminal 200 illustrated in FIG. 6 may include, for example, radio transceiver 201, separator 202, preamble receiver 203, demodulator 204, error correction decoder 205, preemption controller 206, data generator 207, scheduler 208, error correction encoder 209, modulator 210, preamble generator 211, and PPDU generator 212.

Note that at least one of separator 202, preamble receiver 203, demodulator 204, error correction decoder 205, preemption controller 206, data generator 207, scheduler 208, error correction encoder 209, modulator 210, preamble generator 211, and/or PPDU generator 212 illustrated in FIG. 6 may be included in the controller illustrated in FIG. 2, and radio transceiver 201 illustrated in FIG. 6 may be included in the transmitter illustrated in FIG. 2.

In FIG. 6, radio transceiver 201 receives a signal via an antenna, performs radio reception processing such as down-conversion and A/D conversion on the received signal, and outputs the signal after the radio reception processing to separator 202. In addition, radio transceiver 201 performs radio transmission processing such as up-conversion and D/A conversion on the signal input from PPDU generator 212, and transmits the signal after the radio transmission processing from the antenna.

For example, radio transceiver 201 determines a PPDU transmission timing based on information input from preemption controller 206 (for example, preemption control information including carrier sensing time). In addition, radio transceiver 201 may perform carrier sensing for a predetermined time immediately before the PPDU transmission timing regardless of a backoff counter, and when the carrier sensing result indicates an idle state, transmit a signal having LL traffic generated by PPDU generator 212 from the antenna to AP 100 in accordance with the transmission timing. As described above, terminal 200 determines, regardless of the backoff counter, that the transmission (for example, preemption) of LL traffic is allowed when the carrier sensing result indicates an idle state, and performs preemption transmission of the allowed LL traffic.

Separator 202 separates, for example, the signal (PPDU) input from radio transceiver 201 into a preamble signal and a data signal, outputs the preamble signal to preamble receiver 203, and outputs the data signal to demodulator 204.

Preamble receiver 203 demodulates and decodes the preamble signal from separator 202, indicates decoding of the data to demodulator 204 and error correction decoder 205 in the case of a signal for terminal 200, and outputs control information (for example, MCS or the like) to be used for the decoding to demodulator 204 and error correction decoder 205. In addition, in a case where the preemption control information is included in the preamble, preamble receiver 203 outputs the preemption control information to preemption controller 206.

Demodulator 204 performs demodulation processing on the received data input from separator 202, and outputs the demodulated signal to error correction decoder 205. Note that the modulation scheme applied in demodulator 204 may be determined based on, for example, the control information (for example, scheduling information) input from preamble receiver 203.

In addition, in a case where the signal input to demodulator 204 is an OFDM signal, AP 100 may perform CP removal processing and DFT processing on the OFDM signal.

Error correction decoder 205 decodes, for example, the demodulated signal input from demodulator 204, and in a case where the preemption control information is included in the decoded signal, outputs the preemption control information to preemption controller 206. Note that the encoding rate applied in error correction decoder 205 may be determined based on, for example, the control information (for example, scheduling information) input from preamble receiver 203.

Preemption controller 206 acquires information (for example, LL traffic) on the traffic type for which preemption is allowed. The information is included in the preemption control information input from any or both of preamble receiver 203 and error correction decoder 205. For example, in a case where terminal 200 has LL traffic, preemption controller 206 indicates data generation to data generator 207. Note that the data size generated by terminal 200 may be determined based on information on at least one of the time duration of the TXOP and/or the time duration of the PPDU included in the preemption control information. In addition, a transmission bandwidth of the transmission data may be configured to, for example, at least a part of the transmission bandwidth of the DL PPDU. Furthermore, the size of the transmission data may be determined based on, for example, the transmission bandwidth.

In addition, preemption controller 206 determines, for example, the carrier sensing time of terminal 200 in the preemption.

For example, preemption controller 206 may determine any one of a plurality of candidates for the carrier sensing time included in the preemption control information. For example, preemption controller 206 may randomly select and use one time from the plurality of candidates for the carrier sensing time. For example, preemption controller 206 may determine one time selected from the candidates for the carrier sensing time as a carrier sensing time to be performed immediately before the preemption. For example, in the example of FIG. 4, STA2 and STA3, which are terminals 200 having LL traffic for which preemption is allowed, use SIFS + 18 µs and SIFS + 9 µs as the carrier sensing times, respectively. Accordingly, the preemption of STA3 is prioritized in the first PPDU transmission gap, and the uplink signals are transmitted without colliding between STA2 and STA3. Note that the processing of selecting the carrier sensing time may be performed once in the TXOP or may be performed for each PPDU transmission gap (for each opportunity of preemption).

Alternatively, preemption controller 206 may determine the carrier sensing time to be performed immediately before the preemption, based on the carrier sensing time (time duration) that is explicitly indicated (or configured) from AP 100 to each terminal 200. For example, AP 100 configuring different carrier sensing times for a plurality of terminals 200 can avoid collision of LL traffic transmissions from the plurality of terminals 200 to AP 100.

Data generator 207 generates uplink data. The uplink data may include, for example, LL traffic. Data generator 207 outputs the generated data signal to error correction encoder 209.

Scheduler 208 outputs control information (for example, scheduling information including uplink signal duration determined from TXOP information or the like acquired by AP 100, the number of streams applied to the data, and/or MCS) from preemption controller 206 to error correction encoder 209, modulator 210, and preamble generator 211, for example. Scheduler 208 may also determine the PPDU length of the uplink signal based on, for example, the TXOP information from preemption controller 206 or the restriction on the size of the PPDU length.

Error correction encoder 209 error-corrects and encodes the data signal input from data generator 207, and outputs the encoded signal to modulator 210. The encoding rate of the data signal in error correction encoder 209 may be determined based on, for example, the scheduling information input from scheduler 208.

Modulator 210 modulates, for example, the signal input from error correction encoder 209, and outputs the modulated signal to PPDU generator 212. Note that the modulation scheme applied in modulator 210 may be determined based on, for example, the scheduling information input from scheduler 208.

In addition, in a case where the modulation signal is an OFDM signal, terminal 200 may form the OFDM signal by mapping the modulated signal to a predetermined frequency resource, then performing IDFT processing, and adding a cyclic prefix (CP).

Preamble generator 211 generates a preamble to be added to the data addressed to AP 100, based on the scheduling information from scheduler 208. The preamble includes, for example, information to be used by AP 100 to receive and decode the data. Preamble generator 211 outputs the generated preamble signal to PPDU generator 212.

PPDU generator 212 generates one PPDU obtained by time-multiplexing the preamble signal from preamble generator 211 and the modulation signal (for example, OFDM signal) from modulator 210 (for example, the preamble signal and the OFDM signal are time-multiplexed in this order), and outputs the PPDU to radio transceiver 201.

The configuration examples of AP 100 and terminal 200 have been described above.

### [Method for Indicating Preemption Control Information]

Next, an exemplary method for indicating preemption control information from AP 100 to terminal 200 will be described.

The preemption control information may include, for example, information on at least one of the presence or absence of preemption within a TXOP, the presence or absence of ACK immediately after a PPDU, a PPDU transmission gap until the next PPDU, a traffic type for which preemption is allowed, and/or a carrier sensing time (for example, configuration time or configuration candidates) of a terminal in preemption.

For example, times in units of µs may be indicated as the PPDU transmission gap and the carrier sensing time, or a predetermined Inter Frame Space (IFS) defined in the specification may be indicated. The predetermined IFS may be, for example, any of a short IFS (SIFS), an arbitration IFS (AIFS), a distributed coordination function (DCF) IFS (DIFS), or a point coordination function (PCF) IFS (PIFS).

The information on the traffic type for which preemption is allowed may be, for example, information indicating whether the preemption is allowed for each traffic type (for example, traffic identifier (TID)) in a bitmap format. In addition, for example, the traffic (for example, LL traffic) for which preemption is allowed may be defined in the specification. In a case where the traffic for which preemption is allowed is defined in the specification, the indication of the traffic type information for which preemption is allowed from AP 100 to terminal 200 may be omitted.

The information on the carrier sensing time of terminal 200 in the preemption may be, for example, information indicating a plurality of candidates for the carrier sensing time in a case where terminal 200 randomly selects the time. Alternatively, as the information on the carrier sensing time, the carrier sensing time (for example, configured value) performed by terminal 200 immediately before the preemption transmission may be indicated to terminal 200.

AP 100 indicates, to terminal 200, all or a part of the preemption control information by using at least one of a preamble, a MAC header, and/or a Trigger frame.

Note that the presence or absence of preemption need not be explicitly indicated to terminal 200. For example, terminal 200 may determine that preemption is allowed when the time duration of the PPDU transmission gap indicated from AP 100 is equal to or longer than a predetermined value. For example, the control may be performed in which preemption within the TXOP is allowed in a case where the time duration of the PPDU transmission gap is longer than SIFS. In a case where preemption is not allowed (in a case of non-allowance), AP 100 need not indicate another preemption control information to terminal 200.

In the following, an example of the indication of preemption control information will be described.

### <Indication Example 1: Indicated in Preamble>

In Indication Example 1, at least a part of the preemption control information is indicated by a preamble.

For example, a part of the preemption control information may be included in a control signal of the preamble constituting the DL PPDU transmitted by AP 100.

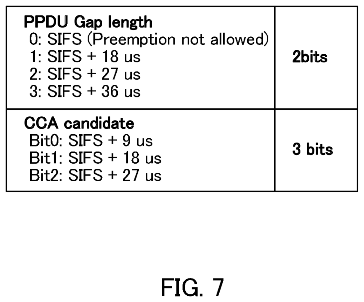

For example, as illustrated in FIG. 7, a Disregard subfield (for example, 5 bits in 11be) included in a U-SIG field of the preamble may be used for the indication of the PPDU transmission gap length and the candidate for the carrier sensing time. In FIG. 7, 2 bits are used for the PPDU transmission gap length (PPDU gap length subfield), and 3 bits are used for the carrier sensing time candidate (CCA candidate subfield).

In the example illustrated in FIG. 7, any of four patterns of time durations (PPDU gap length subfield = 0 to 3) is indicated as the PPDU transmission gap length. For example, in a case where PPDU gap length subfield = 2, AP 100 can indicate to terminal 200 that the PPDU transmission gap length is SIFS + 27 µs.

As illustrated in FIG. 7, for example, in a case where the PPDU transmission gap length is SIFS (PPDU gap length subfield = 0), it may indicate that the preemption in the PPDU transmission gap is not allowed. In this case, the explicit indication of the presence or absence of the preemption allowance may be omitted.

In addition, as illustrated in FIG. 7, AP 100 may indicate, to terminal 200, any time candidate from three patterns as the carrier sensing time candidate (CCA candidate subfield) in a bitmap format. For example, in a case where each bit (any of Bit0, Bit1, and Bit2) is 0, the corresponding carrier sensing time need not be configured as the candidate for terminal 200, and in a case where each bit (any of Bit0, Bit1, and Bit2) is 1, the corresponding carrier sensing time may be configured as the candidate for terminal 200. For example, in a case where CCA candidate subfield = 6, [Bit2 Bit1 Bit0] is [1 1 0], SIFS + 9 µs is not included, and SIFS + 18 µs and SIFS + 27 µs are included in the carrier sensing time candidates configured for terminal 200. In this case, terminal 200 may select either SIFS + 18 µs or SIFS + 27 µs to perform carrier sensing.

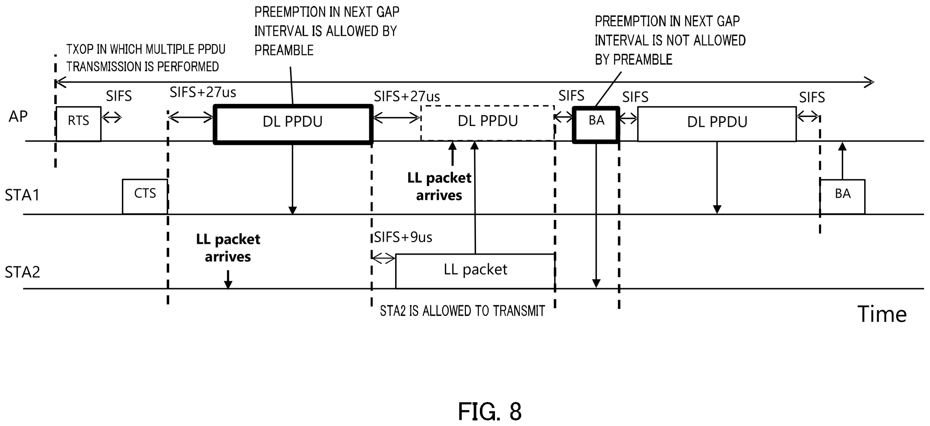

In addition, AP 100 may indicate, to terminal 200, individual preemption control information for each PPDU that is transmitted within the TXOP. For example, as illustrated in FIG. 8, in the preamble constituting the first DL PPDU transmitted by AP 100, the preemption in the next PPDU transmission gap is allowed, and the PPDU transmission gap is configured to SIFS + 27 µs.

On the other hand, as illustrated in FIG. 8, in the preamble constituting the next PPDU (BA in the example of FIG. 8) transmitted by AP 100, the preemption in the next PPDU transmission gap is not allowed, and the PPDU transmission gap length is configured to SIFS. For example, in a case where LL traffic for STA1 occurs at AP 100, AP 100 may not allow the preemption. Accordingly, AP 100 can transmit LL traffic to STA1 with priority over the transmission from terminal 200.

### <Indication example 2-1: Indicated in RTS>

In Indication Example 2-1, at least a part of the preemption control information is indicated by RTS.

For example, at least a part of the preemption control information may be included in the RTS transmitted first by AP 100 after the TXOP is acquired.

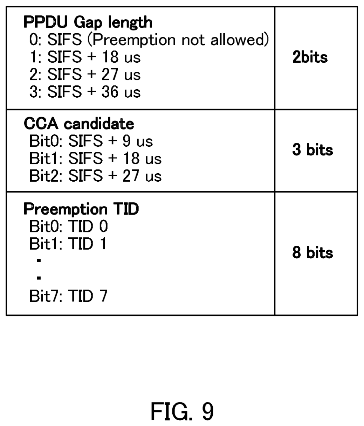

For example, a part or all of a Reserved subfield (for example, 20 bits in 11be) included in a User Info field of the MU-RTS Trigger frame may be used for indicating the PPDU transmission gap length, the carrier sensing time candidate, and the traffic type for which preemption is allowed. For example, in FIG. 9, 2 bits are used for the PPDU transmission gap length (PPDU gap length subfield), 3 bits are used for the carrier sensing time candidate (CCA candidate subfield), and 8 bits are used for the traffic type for which preemption is allowed (preemption TID). Note that the indication of the PPDU transmission gap length (PPDU gap length subfield) and the carrier sensing time candidate (CCA candidate subfield) illustrated in FIG. 9 is the same as that in the example of FIG. 7.

In the example illustrated in FIG. 9, AP 100 may indicate, to terminal 200, any TID from eight types of TIDs as the TID for which preemption is allowed (preemption TID subfield) in a bitmap format.

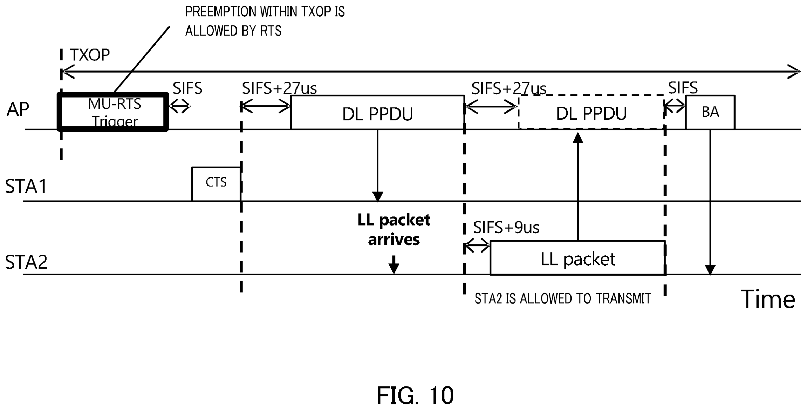

For example, as illustrated in FIG. 10, AP 100 transmits an RTS signal transmitted first after the TXOP is acquired, in the MU-RTS Trigger frame, and indicates the preemption control information within the TXOP to terminal 200. For example, when preemption allowance is indicated to terminal 200, terminal 200 (for example, STA2 illustrated in FIG. 10) can perform preemption in the PPDU transmission gap within the TXOP. Note that, as in the example of FIG. 3, the PPDU transmission gap before the first DL PPDU may be configured to SIFS (that is, preemption may be possible in the gaps before the second and subsequent DL PPDUs).

### <Indication Example 2-2: Indicated in RTS>

In Indication Example 2-2, at least a part of the preemption control information is indicated in RTS, as in Indication Example 2-1.

In Indication Example 2-2, for example, a Reserved subfield (for example, 10 bits in 11be) included in the User Info field of the MU-RTS TXS (TXOP Sharing) Trigger frame may be used for the indication of the PPDU transmission gap length and the carrier sensing time candidate as illustrated in FIG. 7.

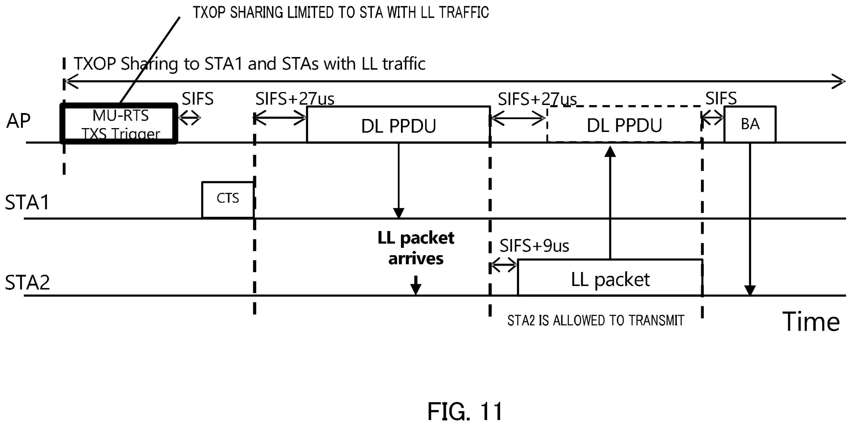

In Indication Example 2-2, for example, a new TXOP sharing mode (for example, mode 3 in addition to modes 1 and 2 defined in 11be) may be defined. In the new TXOP sharing mode, for example, AP 100 may share a part of the TXOP acquired by AP 100 only for communication between AP 100 and the terminal specified by the Trigger frame (STA1 in the example of FIG. 11) and communication between AP 100 and terminal 200 with LL traffic (STA2 in the example of FIG. 11). For example, in FIG. 11, STA2 can share a part of the TXOP when STA2 has LL traffic even though STA2 is not a terminal specified by the Trigger frame.

For example, as illustrated in FIG. 11, AP 100 transmits an RTS signal transmitted first after the TXOP is acquired, in the MU-RTS TXS Trigger frame, and indicates the preemption control information within the TXOP to terminal 200. For example, when preemption allowance is indicated to terminal 200, terminal 200 (for example, STA2 illustrated in FIG. 11) can perform preemption (for example, may be referred to as TXOP Sharing) in the PPDU transmission gap within the TXOP. Note that, as in the example of FIG. 3, the PPDU transmission gap before the first DL PPDU may be configured to SIFS (that is, preemption may be possible in the gaps before the second and subsequent DL PPDUs).

A new trigger type for UHR may be defined for the Trigger frame that transmits the MU-RTS frame including the preemption control information in Indication Example 2-1 and Indication Example 2-2. For example, a new Trigger type may be specified, and the size of the User Info field format and the information type included in the Trigger frame may be newly defined.

### <Combination of Indication Example 1 and Indication Example 2 (Indication Example 2-1 or Indication Example 2-2)>

Indication Example 1 and Indication Example 2-1 (or Indication Example 2-2) may be combined.

For example, a part of the preemption control information may be indicated by the preamble, and the other information of the preemption control information may be indicated by the RTS.

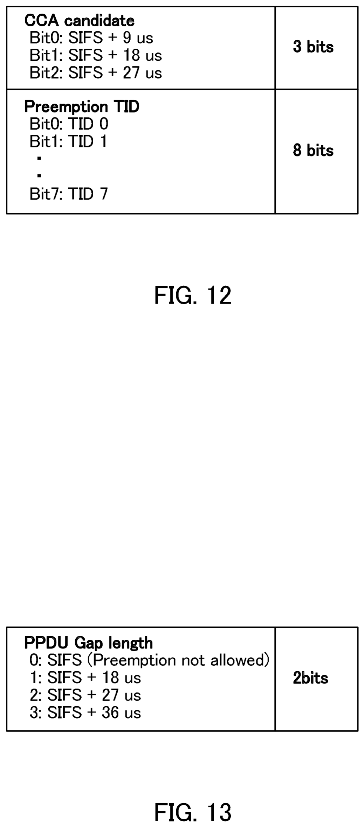

For example, as in Indication Example 2-1, at least a part of the Reserved subfield (for example, 20 bits in 11be) included in the User Info field of the MU-RTS Trigger frame may be used for the indication of the carrier sensing time candidate (CCA candidate subfield) and the traffic type for which preemption is allowed (preemption TID subfield) as illustrated in FIG. 12. Furthermore, as in Indication Example 1, for example, at least a part of the Disregard subfield (for example, 5 bits in 11be) included in the U-SIG field of the preamble may be used for the indication of the PPDU transmission gap length (PPDU gap length subfield) as illustrated in FIG. 13.

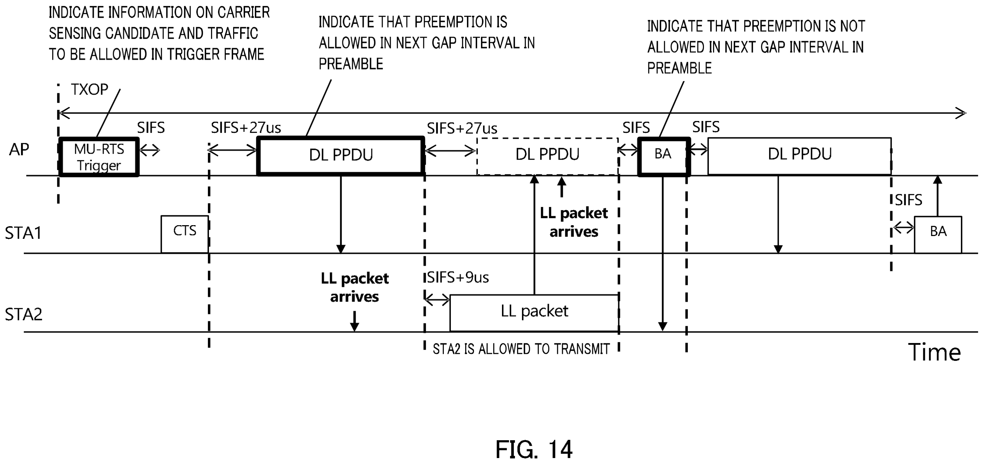

For example, as illustrated in FIG. 14, AP 100 transmits the RTS signal transmitted first after the TXOP is acquired, in the MU-RTS Trigger frame, and indicates, as the preemption control information applied in common in the TXOP, the candidate for the carrier sensing time to be performed immediately before the preemption transmission and the traffic type for which preemption is allowed. In addition, as illustrated in FIG. 14, AP 100 indicates, in the preamble constituting a DL PPDU or BA from AP 100, the PPDU transmission gap length of the PPDU to be transmitted next and the presence or absence of the preemption allowance for each PPDU. Note that, as in the example of FIG. 3, the PPDU transmission gap before the first DL PPDU may be configured to SIFS (that is, preemption may be possible in the gaps before the second and subsequent DL PPDUs).

This enables AP 100 to distinguish and indicate the preemption control information that can be applied in common in the TXOP (for example, the carrier sensing time candidate and the traffic type for which preemption is allowed) and the preemption control information that is dynamically changed according to the occurrence status of LL traffic (for example, the presence or absence of preemption allowance).

The same effect can be obtained by using the MU-RTS TXS Trigger frame of Indication Example 2-2 instead of the MU-RTS Trigger frame.

### <Indication Example 3: Indicated to Each STA>

In Indication Example 3, at least a part of the preemption control information is indicated by the User Info field of the RTS.

For example, at least a part of the preemption control information may be included in the User Info field of the RTS signal transmitted first by AP 100 after the TXOP is acquired.

For example, AP 100 may indicate a part of the preemption control information for terminal 200 (for example, preemption transmission candidate terminal) in the User Info field of the MU-RTS Trigger frame or the MU-RTS TXS Trigger frame. In addition, for example, a preemption candidate flag and a carrier sensing time for each terminal 200 may be individually indicated using the User Info field.

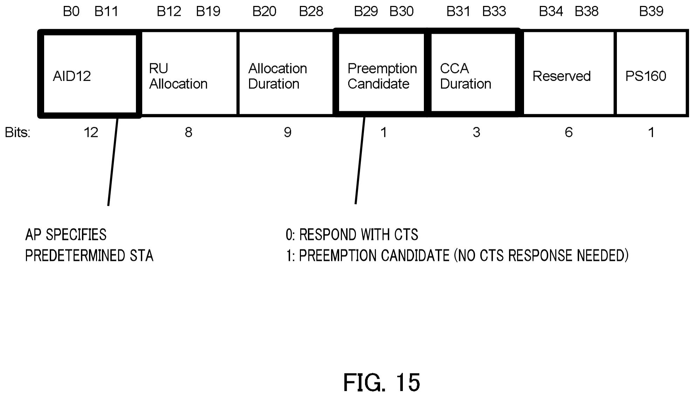

FIG. 15 illustrates an example of the User Info field of the MU-RTS TXS Trigger frame according to Indication Example 3. In FIG. 15, the AID12 subfield indicates an Association ID (AID) for identifying terminal 200 to which the control information of the User Info field is indicated.

In FIG. 15, a preemption candidate subfield (for example, 1 bit) indicates a preemption candidate flag. For example, when the preemption candidate flag is 0, responding with a CTS signal is indicated as in the existing operation, and when the preemption candidate flag is 1, it is indicated that the terminal specified by the AID12 subfield of the User Info field is a preemption candidate terminal (for example, terminal for which preemption is allowed when a predetermined condition is satisfied). The predetermined condition may be, for example, a condition in which the terminal has the traffic (LL traffic) for which preemption is allowed and the result of the carrier sensing for a predetermined time immediately before the preemption transmission indicates an idle state. Terminal 200 of the preemption candidate terminal need not transmit a CTS response in a case where terminal 200 receives the MU-RTS TXS Trigger frame including the User Info field illustrated in FIG. 15.

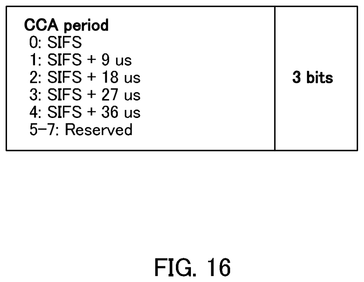

In FIG. 15, the CCA Duration subfield indicates a time duration of the carrier sensing performed immediately before the preemption transmission by terminal 200 specified by the AID12 subfield. For example, as illustrated in FIG. 16, 3 bits are used for the CCA Duration subfield, and any of five patterns of time durations (CCA Duration subfield = 0 to 4) is indicated as the carrier sensing time duration.

For example, AP 100 determines one carrier sensing time for each terminal 200 from the candidates for the carrier sensing time defined as in FIG. 16 such that the time duration varies between a plurality of terminals 200 indicated by the Trigger frame. AP 100 then indicates the time to terminal 200 using the CCA Duration subfield.

Note that, in the case where the MU-RTS TXS Trigger frame is used, for the terminal indicated by the first User Info field, the User Info field may indicate existing TXOP sharing, and the second and subsequent User Info fields may be used for the control information for the preemption candidate terminal. In this case, in the second and subsequent User Info fields, the indication of the candidate flag (preemption candidate subfield) need not be performed.

As described above, the carrier sensing time performed immediately before the preemption transmission can be varied between terminals 200, and thus collisions can be avoided even when a plurality of terminals 200 with LL traffic is present.

The examples of the method for indicating the preemption control information have been described above.

As described above, in the present embodiment, terminal 200 determines the carrier sensing time in the PPDU transmission gap (for example, predetermined time interval) based on a predetermined rule (for example, relationship with the carrier sensing time of AP 100 or relationship between a plurality of terminals 200), and performs preemption transmission of the signal of LL traffic (for example, predetermined type) based on the result of the carrier sensing.

For example, the carrier sensing time for performing preemption is different between the plurality of terminals 200, and thus collision of the uplink signals between the plurality of terminals 200 can be avoided even when a plurality of terminals 200 with LL traffic is present, which enables AP 100 to suppress the increase in delay due to the inability to receive all uplink signals.

Therefore, according to the present embodiment, the efficiency of the transmission control in radio communication can be improved.

### (Variation of Embodiment 1)

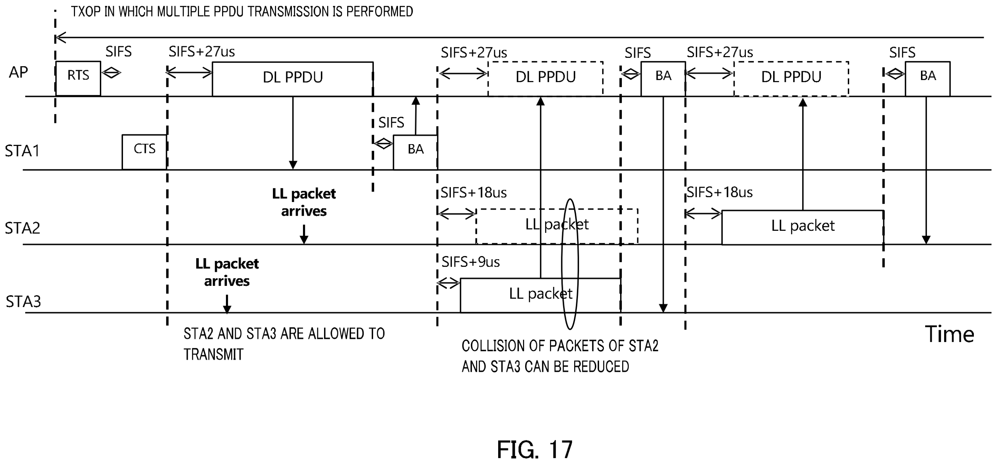

The PPDU transmission gap in which preemption is allowed is not limited to the interval (gap) between DL PPDUs as illustrated in FIGS. 3 and 4. For example, in a case where an immediate response ACK (for example, BA) is requested immediately after a DL PPDU, an interval (non-transmission interval) between the BA (ACK) from terminal 200 or AP 100 and a DL PPDU may be defined as the PPDU transmission gap as illustrated in FIG. 17.

For example, in FIG. 17, a time interval (in FIG. 17, SIFS + 27 µs) from when AP 100 receives a BA signal from STA1 for the DL PPDU transmitted from AP 100 (AP in FIG. 17) (for example, from the end timing of the BA) to when AP 100 transmits the next DL PPDU may be configured as the PPDU transmission gap. Terminal 200 (STA2 and STA3 in FIG. 17) performs, based on the preemption control information indicated from AP 100, preemption transmission of LL traffic to AP 100 in the above-described PPDU transmission gap when the result of the carrier sensing in the predetermined carrier sensing time indicates an idle state. As illustrated in FIG. 17, varying the carrier sensing times of STA2 and STA3 can avoid the collision of the preemption signals. As in the example of FIG. 3, the PPDU transmission gap before the first DL PPDU may be SIFS (that is, preemption may be possible in the gaps before the second and subsequent DL PPDUs).

The presence or absence of BA or ACK that immediately responds to the DL PPDU may be indicated by, for example, the Ack Policy included in the QoS Control of the MAC header. For example, this can be controlled by indicating No ack (no BA or ACK) or Implicit BA (with BA or ACK) in the Ack Policy indicator.

### (Embodiment 2)

In the present embodiment, AP allows, in a period called a Restricted-Target Wake Time Service Period (R-TWT SP) specified for the connection terminal, the communication (for example, may be referred to as preemption) limited to a predetermined type of traffic (for example, LL traffic) for a predetermined terminal group (for example, STA Membership). The R-TWT SP may be indicated from AP to the terminals by, for example, a beacon.

### [Configuration of Radio Communication System]

The radio communication system according to the present embodiment may include, for example, AP 100 and terminal 200. Two or more terminals 200 may be present in the radio communication system.

AP 100 allows communication limited to LL traffic for a predetermined terminal group in the R-TWT SP indicated by AP 100.

In the R-TWT SP, in a case of performing communication limited to LL traffic for the predetermined terminal group, terminal 200 determines that the transmission of LL traffic is allowed when the result of the carrier sensing for a predetermined time indicates an idle state regardless of a backoff counter, and transmits the allowed LL traffic.

Terminal 200 receives, for example, a beacon from AP 100, and acquires R-TWT control information and preemption control information included in the received beacon. The R-TWT control information may include, for example, information on an R-TWT SP, a membership ID, and a traffic type for which communication is allowed in the R-TWT-SP. In addition, the preemption control information may include, for example, information on the carrier sensing time of terminal 200 and candidates for the carrier sensing time. For example, different carrier sensing times may be configured for a plurality of terminals 200 belonging to the same terminal group (for example, the same broadcast TWT ID).

In the R-TWT-SP, terminal 200 has LL traffic for which communication is allowed, and transmits an uplink signal to AP 100 when the result of the carrier sensing for a predetermined time indicates idle. On the other hand, when terminal 200 does not have the traffic type for which communication is allowed or the result of the carrier sensing indicates busy, terminal 200 determines that the transmission is not possible.

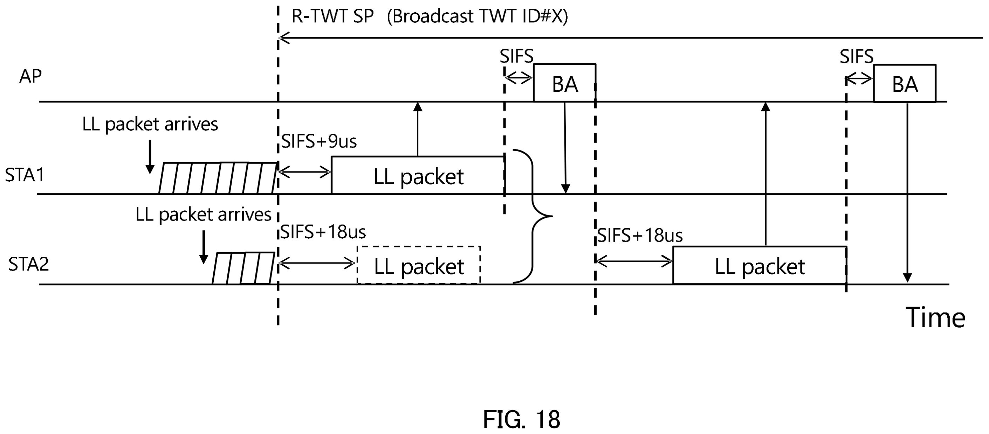

FIG. 18 illustrates an example of a sequence in a case where terminals 200 (for example, STA1 and STA2) belong to a terminal group to which communication in the R-TWT SP is allowed, and have LL traffic for which communication is allowed, as an example.

In FIG. 18, a plurality of terminals 200 (STA1 and STA2) connected to AP 100 (for example, AP) belongs to a terminal group (for example, broadcast TWT ID#X) to which communication in the R-TWT SP is allowed, and has LL traffic for which communication is allowed. Therefore, each terminal 200 transmits LL traffic (LL packet) when the carrier sensing time determined by each terminal 200 is idle, regardless of the backoff counter.

In the example of FIG. 18, the carrier sensing time of STA1 is SIFS + 9 µs, and the carrier sensing time of STA2 is SIFS + 18 µs. Thus, the transmission of STA1 is prioritized over the transmission of STA2. After the transmission of STA1, STA2 executes the carrier sensing from the BA signal from AP and then transmits LL traffic.

As illustrated in FIG. 17, varying the carrier sensing times of STA2 and STA3 can avoid the collision of the preemption signals in the terminal group to which communication is allowed in the R-TWT SP.

### [Configuration Example of AP 100]

The configuration of AP 100 according to the present embodiment may be the same as the configuration of AP 100 (for example, FIG. 5) according to Embodiment 1. In AP 100 according to the present embodiment, the operations of scheduler 101 and data generator 102 are different from those in Embodiment 1.

Scheduler 101 performs, for example, the scheduling of the R-TWT SP limited to LL traffic communication for a predetermined terminal group including terminal 200. For example, scheduler 101 determines the scheduling information on the R-TWT SP based on the transmission buffer state of LL traffic or the like fed back from terminal 200, and outputs the scheduling information to data generator 102.

In addition, scheduler 101 determines preemption control information used for the transmission (for example, referred to as preemption transmission) not considering the backoff counter of the R-TWT SP, and outputs the information to data generator 102. The preemption control information may include, for example, information on the carrier sensing time of terminal 200 and candidates for the carrier sensing time.

Data generator 102 generates, for example, a signal (for example, TWT element) to be indicated to terminal 200 based on the scheduling information on the R-TWT SP and the preemption control information determined in scheduler 101. Then, data generator 102 generates a beacon signal including the TWT element, and outputs the beacon signal to error correction encoder 103, for example.

AP 100 transmits the beacon signal to terminal 200. In addition, AP 100 receives and decodes the signal including LL traffic transmitted from terminal 200 in the R-TWT SP.

### [Configuration Example of Terminal 200]

The configuration of terminal 200 according to the present embodiment may be the same as the configuration of terminal 200 (for example, FIG. 6) according to Embodiment 1. In terminal 200 according to the present embodiment, the operation of preemption controller 206 is different from that in Embodiment 1.

Preemption controller 206 acquires the scheduling information on the R-TWT SP and the preemption control information input from any or both of preamble receiver 203 and error correction decoder 205.

When terminal 200 has LL traffic for which communication is allowed in the R-TWT SP, preemption controller 206 indicates data generation to data generator 207.

In addition, preemption controller 206 determines the carrier sensing time in the R-TWT SP. For example, preemption controller 206 may randomly select one time from among a plurality of candidates for the carrier sensing time included in the preemption control information and configure the selected time as the carrier sensing time in the R-TWT SP. Alternatively, preemption controller 206 may configure the carrier sensing time explicitly indicated from AP 100 to each terminal 200 as the carrier sensing time in the R-TWT SP.

As described above, terminal 200 receives the beacon signal from AP 100, and transmits LL traffic to AP 100 in the R-TWT SP when the carrier sensing for a predetermined time immediately before the transmission is in an idle state, based on the scheduling information on the R-TWT SP and the preemption control information included in the beacon signal.

### [Method for Indicating Preemption Control Information]

Next, an exemplary method for indicating preemption control information from AP 100 to terminal 200 will be described.

The carrier sensing time performed by each terminal 200 before the transmission of LL traffic in the R-TWT SP may be indicated from AP 100 to terminal 200 by a TWT response signal that configures the participation of terminal 200 in the membership of the R-TWT-SP (also referred to as TWT membership).

For example, AP 100 can avoid collisions of LL traffic from a plurality of terminals 200 in the R-TWT SP by varying the carrier sensing times between the plurality of terminals 200 for which the same broadcast TWT ID (membership ID of the R-TWT SP) is configured.

In the following, a variation of the indication of the preemption control information will be described.

### <Variation 2-1>

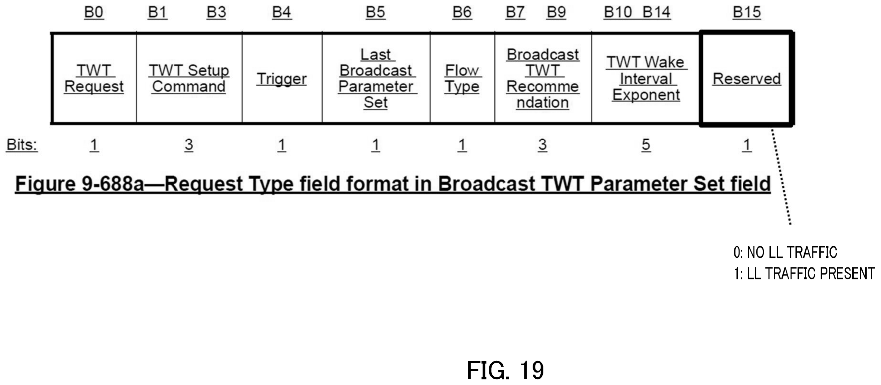

In Variation 2-1, terminal 200 may include information on whether terminal 200 has LL traffic (or whether terminal 200 may have LL traffic) in a frame requesting the addition to the TWT membership (for example, TWT request). For example, as illustrated in FIG. 19, terminal 200 may include 1-bit information on whether terminal 200 has LL traffic, in a Request Type field (in FIG. 19, Reserved field) of a Broadcast TWT Parameter Set field of the TWT element, and indicate the information to AP 100. For example, the 1 bit being 0 corresponds to the case where no LL traffic is present or the case where terminal 200 has no possibility of having LL traffic, and the 1 bit being 1 indicates the case where LL traffic is present or the case where terminal 200 has LL traffic (or case where terminal 200 may have LL traffic).

AP 100 may associate terminal 200 having LL traffic (or terminal 200 that may have LL traffic) with different Broadcast TWT IDs (different terminal groups) based on the information on whether terminal 200 has LL traffic.

Accordingly, the terminal having LL traffic (or terminal that may have LL traffic) is likely to have different TWT memberships, and thus collisions between the terminals having LL traffic in the same R-TWT SP can be reduced.

### <Variation 2-2>

In Variation 2-2, AP 100 may indicate the preemption control information for each terminal 200 by using a frame (for example, TWT response) that specifies addition to the TWT membership for terminal 200.

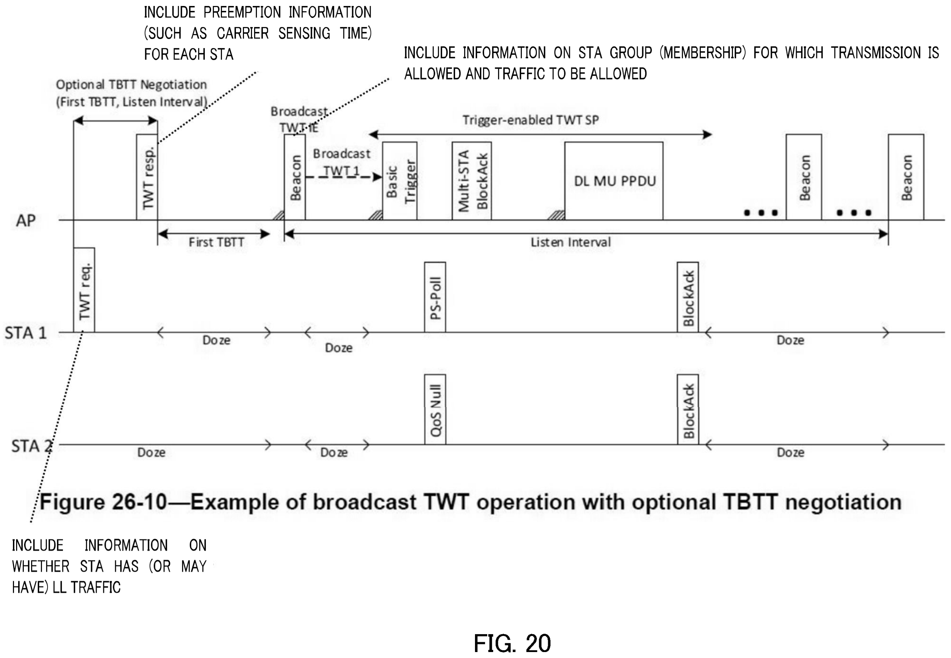

FIG. 20 illustrates an example of the TWT operation.

As illustrated in FIG. 20, AP 100 transmits a TWT response including the preemption control information to terminal 200 (STA1 in FIG. 20) that has transmitted the TWT request, for example.

In addition, AP 100 may transmit a signal (for example, unsolicited TWT response (TWT response transmitted by AP in a case where there is no TWT request from the terminal)) including the preemption control information to terminal 200 (for example, STA2 in FIG. 20) determined to be a terminal candidate for which preemption occurs in the R-TWT SP, based on the capability (processing capability) of terminal 200 connected to AP 100 related to preemption or the indication of the presence or absence of LL traffic, for example.

In addition, AP 100 may explicitly indicate the carrier sensing time in the R-TWT-SP for each terminal 200. For example, the individual carrier sensing time may be configured for each terminal 200 by including the preemption control information in a TWT parameter set field of the TWT element. AP 100 can avoid collision of LL traffic in the R-TWT SP by configuring a different carrier sensing time for each terminal 200.

Note that, in FIG. 20, as described above, the TWT request frame transmitted by STA1 includes information indicating whether STA1 has LL traffic (or whether STA1 may have LL traffic). Then, as a response to the TWT request frame (information indicating whether STA1 has LL traffic), AP 100 indicates the carrier sensing time used by STA1 in the R-TWT SP in the TWT response frame.

In addition, as described above, the scheduling information on the R-TWT SP (terminal group to which communication in the R-TWT SP is allowed, and/or a traffic type to be allowed) is indicated using the beacon signal transmitted by AP 100.

The example of the indication of the preemption control information has been described above.

As described above, in the present embodiment, terminal 200 determines the carrier sensing time in the R-TWT SP (for example, predetermined time interval) based on a predetermined rule (for example, relationship with carrier sensing time of AP 100 or relationship between a plurality of terminals 200), and performs preemption transmission of the signal of LL traffic (for example, predetermined type) based on the carrier sensing result.

For example, the carrier sensing time for performing preemption is different between the plurality of terminals 200, and thus the collision of the uplink signals between the plurality of terminals 200 can be avoided even when a plurality of terminals 200 with LL traffic is present, which enables AP 100 to suppress the increase in delay due to the inability to receive all uplink signals.

Therefore, according to the present embodiment, the efficiency of the transmission control in radio communication can be improved.

### (Embodiment 3)

### [Configuration of Radio Communication System]

The radio communication system according to the present embodiment may include AP 300, AP 400, and terminal 500.

Terminal 500 is a terminal connected to AP 400.

AP 300 transmits a downlink signal limited to predetermined traffic (for example, LL traffic) to terminal 500.

AP 400 is an AP having a relay function of relaying a reception signal from AP 300 to terminal 500. AP 400 may be a terminal (for example, non-AP terminal or non-AP STA) having the relay function.

For example, the present embodiment may be applied to multi-AP transmission in which a plurality of APs (for example, AP 300 and AP 400) performs coordinated transmission.

AP 400 having the relay function receives the downlink signal from AP 300. Then, when the result of the carrier sensing for a predetermined time (for example, SIFS + 9 µs) longer than the carrier sensing time for the ACK response by terminal 500 indicates an idle state, the received signal is transmitted (relayed) to terminal 500. When the result of the carrier sensing indicates busy, AP 400 stops the transmission (relay) to terminal 500.

When terminal 500 correctly decodes the downlink signal from AP 300, terminal 500 transmits (responds with) ACK to AP 300 after executing carrier sensing for a predetermined time (for example, carrier sensing time for the ACK response (for example, SIFS)). On the other hand, when terminal 500 does not correctly decode the downlink signal from AP 300, terminal 500 receives the relay signal from AP 400. Then, when correctly decoding the relay signal, terminal 500 responds with ACK to AP 300.

When terminal 500 does not correctly decode the relay signal from AP 400 either, terminal 500 does not perform ACK response. Thus, AP 300 may determine that the transmission to terminal 500 is NG, and retransmit the downlink signal.

As described above, in the present embodiment, AP 400 and terminal 500 perform carrier sensing (for example, carrier sensing time) determined by the predetermined rule, transmit a signal when the carrier sensing result indicates an idle state, and do not transmit the signal when the carrier sensing result indicates busy. For example, according to the predetermined rule, the carrier sensing time of terminal 500 (for example, terminal to which the downlink signal is relayed) is configured to be shorter than the carrier sensing time of AP 400 (for example, terminal from which the downlink signal is relayed).

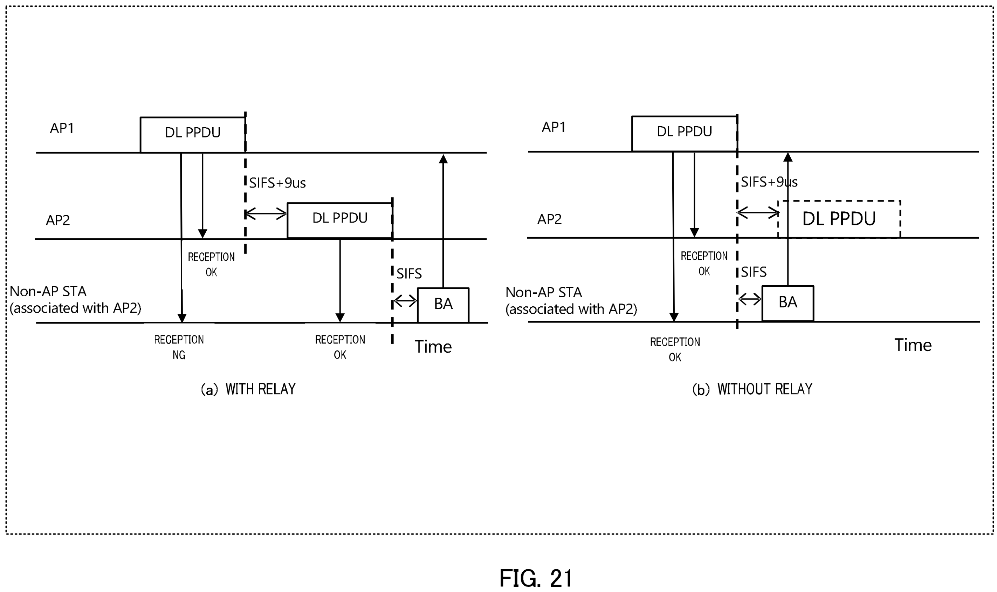

Part (a) in FIG. 21 illustrates an example of a sequence in a case where terminal 500 (non-AP STA) does not decode the downlink signal from AP 300 (AP1) (reception NG), and part (b) in FIG. 21 illustrates an example of a sequence in a case where terminal 500 correctly decodes the downlink signal from AP 300 (reception OK).

In the examples of parts (a) and (b) in FIG. 21, SIFS + 9 µs is configured as the carrier sensing time of AP 400, and SIFS shorter than SIFS + 9 µs is configured as the carrier sensing time of terminal 500.

As illustrated in part (a) in FIG. 21, in a case where the non-AP STA cannot decode the downlink signal from AP 1 (reception NG), no ACK is transmitted from the non-AP STA, so that, at AP 2, the carrier sensing result does not indicate busy due to signal transmission from the non-AP STA, and AP 2 relays the downlink signal from AP 1 to the non-AP STA. On the other hand, as illustrated in part (b) in FIG. 21, in a case where the non-AP STA correctly decodes the downlink signal from AP 1 (reception OK), ACK is transmitted from the non-AP STA, so that, at AP2, the carrier sensing result indicates busy due to transmission from the non-AP STA, and AP 2 does not relay the downlink signal from AP 1 to the non-AP STA.

As described above, the downlink signal is relayed from AP 400 in the case where terminal 500 does not decode the downlink signal from AP 300 (in the case of reception NG), and the downlink signal is not relayed from AP 400 in the case where terminal 500 decodes the downlink signal from AP 300 (in the case of reception OK). Accordingly, the processing of transmitting the relay signal does not always occur, which reduces delay of the communication of the downlink signal including LL traffic from AP 300 to terminal 500.

### [Configuration Example of AP 300]

The configuration of AP 300 according to the present embodiment may be the same as the configuration of AP 100 (for example, FIG. 5) according to Embodiment 1. In AP 300 according to the present embodiment, the operation of scheduler 101 is different from that in Embodiment 1.

Scheduler 101 performs, for example, the scheduling of predetermined traffic (for example, LL traffic) for AP 400 and terminal 500.

In addition, scheduler 101 determines, for each of AP 400 and terminal 500, the preemption control information including a carrier sensing time for transmitting a response signal (for example, including BA or relay signal) for the downlink signal, and outputs the information to data generator 102, for example.

Here, the carrier sensing time for the response signal of AP 400 (for example, relay signal) is configured to be longer than the carrier sensing time for the response signal of terminal 500 (for example, BA). For example, because ACK is assumed as the response signal of terminal 500, the carrier sensing time may be configured to be SIFS. In addition, because the relay signal to terminal 500 is assumed as the response signal of AP 400, the carrier sensing time may be configured to be SIFS + 9 µs longer than SIFS.

In a case where the carrier sensing time for ACK transmission is defined in the specification (for example, in a case where the carrier sensing time for ACK response is define to be SIFS), AP 300 need not include the carrier sensing time for terminal 500 in the preemption control information.

As described above, AP 300 transmits the downlink signal including LL traffic to AP 400 and terminal 500. In addition, AP 300 receives and decodes the ACK transmitted when terminal 500 correctly decodes the downlink signal.

### [Configuration Example of AP 400]

The configuration of AP 400 having the relay function according to the present embodiment may be the same as the configuration of terminal 200 (for example, FIG. 6) according to Embodiment 1. In AP 400 according to the present embodiment, the operation of preemption controller 206 is different from that in Embodiment 1.

Preemption controller 206 of AP 400 acquires the preemption control information input from any or both of preamble receiver 203 and error correction decoder 205, and the signal from AP 300 input from error correction decoder 205.

In addition, preemption controller 206 of AP 400 determines, for example, the carrier sensing time until the relay signal to terminal 500 is transmitted. For example, preemption controller 206 may randomly select one time from among a plurality of candidates for the carrier sensing time included in the preemption control information and configure the selected time as the carrier sensing time until the relay signal is transmitted. Alternatively, preemption controller 206 may configure the carrier sensing time that is explicitly indicated from AP 300 as the carrier sensing time until the relay signal is transmitted.

As described above, AP 400 receives the downlink signal from AP 300, and transmits (relays) the downlink signal from AP 300 to terminal 500 when the carrier sensing for a predetermined time immediately before the transmission of the relay signal is in an idle state, based on the preemption control information included in the downlink signal.

### [Configuration Example of Terminal 500]

The configuration of terminal 500 according to the present embodiment may be the same as the configuration of terminal 200 (for example, FIG. 6) according to Embodiment 1. In terminal 500 according to the present embodiment, the operation of preemption controller 206 is different from that in Embodiment 1.

Preemption controller 206 of terminal 500 acquires the preemption control information input from any or both of preamble receiver 203 and error correction decoder 205, and the signal from AP 300 or AP 400 input from error correction decoder 205. Note that, in a case where the output result from error correction decoder 205 indicates that the received signal cannot be correctly decoded (for example, in a case where NG is detected by a frame check sequence (FCS)), the transmission of the ACK is stopped.

In addition, preemption controller 206 of terminal 500 determines, for example, the carrier sensing time until ACK to AP 300 is transmitted. For example, preemption controller 206 may randomly select one time from among a plurality of candidates for the carrier sensing time included in the preemption control information and configure the selected time as the carrier sensing time until the ACK is transmitted. Alternatively, preemption controller 206 may configure the carrier sensing time that is explicitly indicated from AP 300 as the carrier sensing time until the ACK is transmitted. Alternatively, preemption controller 206 may apply the carrier sensing time for ACK defined in the specification.

As described above, terminal 500 receives the downlink signal from AP 300 or AP 400, and transmits the ACK signal to AP 300 when the carrier sensing for a predetermined time immediately before the transmission of the ACK is in an idle state, based on the preemption control information included in the downlink signal.

As described above, in the present embodiment, AP 400 and terminal 500 determine the carrier sensing time based on a predetermined rule (for example, relationship between the carrier sensing times between AP 400 and terminal 500), and transmit the signal of LL traffic (for example, predetermined type) or the response signal based on the carrier sensing result.

For example, by configuring the carrier sensing time for terminal 500 to transmit the response signal (for example, ACK or BA) to be shorter than the carrier sensing time for AP 400 to transmit the response signal (for example, relay signal), collision of signals between AP 400 (or relay source terminal or transmission terminal) and terminal 500 (or relay destination terminal or reception terminal) can be avoided, and the transmission of the response signal (for example, relay signal or ACK) can be performed.

Therefore, according to the present embodiment, the efficiency of the transmission control in radio communication can be improved.

### (Embodiment 4)

In the present embodiment, for example, random access communication limited to predetermined traffic (for example, LL traffic) in the PPDU transmission gap within the TXOP acquired by AP is allowed.

For example, in the present embodiment, in the case of performing random access limited to LL traffic in the PPDU transmission gap, a terminal can transmit allowed traffic (for example, LL traffic) when the carrier sensing for a predetermined time is in an idle state, regardless of the backoff counter for random access (for example, OFDMA random access backoff (OBO) counter) (for example, OBO counter = 0).

As described above, allowing the preemption of the random access signal limited to LL traffic in the gap between PPDUs can reduce the collision of the uplink signals between the terminals having LL traffic.

### [Configuration of Radio Communication System]

The radio communication system according to the present embodiment may include, for example, AP 100 and terminal 200. Two or more terminals 200 may be present in the radio communication system.

AP 100 allows, for example, the preemption of an uplink random access signal limited to a predetermined traffic type (for example, LL traffic) in the PPDU transmission gap within the TXOP acquired by AP 100.

Terminal 200 receives, for example, a downlink PPDU from AP 100, and controls the preemption of the uplink random access signal based on preemption control information included in the received PPDU.

Note that the preemption control information may be indicated by, for example, any one or a combination of a preamble, a MAC header, or a Trigger frame. In addition, the preemption control information may include, for example, information on a resource for random access (for example, Random access-Resource unit (RA-RU)), the presence or absence of ACK immediately after a PPDU, a PPDU transmission gap time, a traffic type for which preemption is allowed, a carrier sensing time of a terminal, or candidates for the carrier sensing time.

In addition, a fixed value may be configured as the carrier sensing time immediately before the transmission of the uplink signal for a plurality of terminals 200. For example, the carrier sensing time configured for terminal 200 may be shorter than the carrier sensing time configured for AP 100. In addition, for example, in a case where the carrier sensing time immediately before the transmission of the uplink signal is SIFS and AP 100 does not indicate execution of carrier sensing to terminal 200, the carrier sensing need not be performed.

For example, when terminal 200 has the traffic type for which preemption is allowed, and the result of the carrier sensing for a predetermined time indicates an idle state, terminal 200 selects one RA-RU from the RA-RUs indicated from AP 100 in the PPDU transmission gap interval and preempts the uplink signal to AP 100 using the selected RA-RU.

On the other hand, for example, when terminal 200 does not have the traffic type for which preemption is allowed, or the carrier sensing result indicates busy in the case where execution of carrier sensing is requested from AP 100, terminal 200 determines that preemption is not allowed.

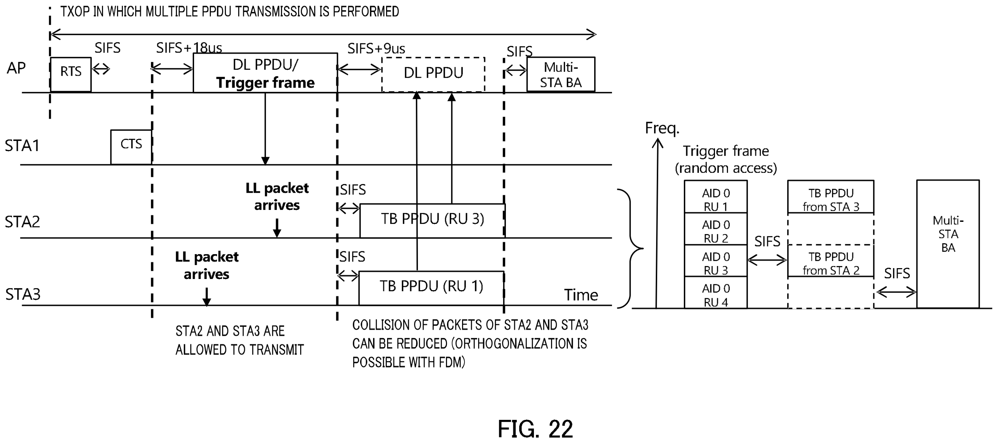

FIG. 22 illustrates an example of a sequence of performing preemption by random access when terminal 200 has LL traffic for which communication is allowed.

In FIG. 22, AP 100 (AP in FIG. 22) transmits, as a DL PPDU, a Trigger frame prompting a terminal to perform random access. In addition, as illustrated in FIG. 2, for the PPDU transmission gap (for example, time interval from when AP 100 transmits a DL PPDU to when AP 100 transmits the next DL PPDU within the TXOP), a value (in FIG. 22, SIFS + 9 µs) longer than the carrier sensing time immediately before the transmission of the random access signal (in FIG. 22, SIFS) is configured. As in the example of FIG. 3, the PPDU transmission gap before the first DL PPDU may be set to SIFS (that is, preemption may be possible in the gaps before the second and subsequent DL PPDUs).

Terminal 200 (STA2 and STA3 in FIG. 22) having LL traffic selects one RA-RU from a plurality of RA-RUs, configures the carrier sensing time performed immediately before the random access transmission to be SIFS, and performs the carrier sensing. When the carrier sensing result indicates an idle state, terminal 200 having LL traffic transmits the uplink signal including LL traffic to AP 100 using the selected RA-RU.

For example, in the example of FIG. 22, AP 100 (AP) configures "0" indicating random access by a plurality of terminals connected to AP (associated STAs) by using the AID12 subfield in the User Info field of the Trigger frame, and indicates one or more RA-RUs (in FIG. 22, RU1 to RU4). Terminals 200 (STA2 and STA3 in FIG. 22) having LL traffic each randomly select one RA-RU from among the RA-RUs of RU1 to RU4 regardless of the OBO counter. In FIG. 22, STA2 selects RU3, and STA3 selects RU1 to transmit LL traffic. As described above, STA2 and STA3 transmit (for example, perform frequency multiplexing transmission of) the uplink signals using different RUs, and thus the uplink signals are likely to be transmitted without colliding with each other (being orthogonalized).

### [Configuration Example of AP 100]

The configuration of AP 100 according to the present embodiment may be the same as the configuration of AP 100 (for example, FIG. 5) according to Embodiment 1. In AP 100 according to the present embodiment, the operations of scheduler 101 and data generator 102 are different from those in Embodiment 1.

Scheduler 101 performs, for example, the scheduling of multiple PPDU transmission and the scheduling of random access limited to LL traffic communication for a plurality of terminals (for example, terminals connected to AP 100) including terminal 200. The scheduling information on the random access may include, for example, the resource size, the number of resources, and the resource position of the RA-RU. The scheduling information on the random access may be, for example, a part of the preemption control information. Scheduler 101 determines, for example, the scheduling information on the multiple PPDU transmission and the random access, and outputs the information to data generator 102.

Data generator 102 generates, for example, a signal (for example, Trigger frame and data signal) to be indicated to terminal 200, based on the preemption control information including the scheduling information on the multiple PPDU transmission and the scheduling information on the random access determined in scheduler 101, and outputs the signal to error correction encoder 103.

As described above, AP 100 transmits the DL PPDU including the Trigger frame to terminal 200. In addition, AP 100 receives and decodes the uplink signal having LL traffic transmitted from terminal 200 via random access.

### [Configuration Example of Terminal 200]

The configuration of terminal 200 according to the present embodiment may be the same as the configuration of terminal 200 (for example, FIG. 6) according to Embodiment 1. In terminal 200 according to the present embodiment, the operations of preemption controller 206, scheduler 208, and modulator 210 are different from those in Embodiment 1.

Preemption controller 206 acquires preemption control information including the scheduling information on random access input from any or both of preamble receiver 203 and error correction decoder 205.

In addition, preemption controller 206 determines the carrier sensing time immediately before the random access. For example, the carrier sensing time before the random access transmission may be common to all terminals 200, and a predetermined time duration (for example, SIFS) may be configured.

When terminal 200 has LL traffic for which communication is allowed, preemption controller 206 indicates data generation to data generator 207.

Scheduler 208 randomly determines (selects) one RA-RU based on the random access information from preemption controller 206, and outputs the determined RA-RU to modulator 210.

Modulator 210 maps the modulation signal to the RA-RU indicated from scheduler 208, forms an OFDM signal, and outputs the formed OFDM signal to PPDU generator 212.

As described above, terminal 200 receives the DL PPDU including the Trigger frame from AP 100, randomly selects one RA-RU from the RA-RUs limited to LL traffic indicated by the Trigger frame, and transmits the random access signal including LL traffic to AP 100 when the carrier sensing for a predetermined time immediately before the transmission is in an idle state.

As described above, in the present embodiment, terminal 200 determines the carrier sensing time in the PPDU transmission gap (for example, predetermined time interval) based on a predetermined rule (for example, the same configuration between the plurality of terminals 200), and performs preemption transmission on the random access signal including LL traffic (for example, predetermined type), based on the carrier sensing result. In this case, terminal 200 determines (for example, randomly selects) any one resource from the candidates of a plurality of frequency resources (for example, a plurality of RUs), and transmits the random access signal by using the determined resource, regardless of the random access transmission counter (for example, OBO counter).

Transmitting random access signals using different frequency resources enables terminal 200 to avoid the collision of the uplink signals between the plurality of terminals 200 even when a plurality of terminals 200 having LL traffic is present, and thus AP 100 can suppress the increase in delay due to the inability to receive all uplink signals.

Therefore, according to the present embodiment, the efficiency of the transmission control in radio communication can be improved.

### (Variation of Embodiment 4)

AP 100 may transmit an NDP Feedback Report Poll (NFRP) Trigger frame prompting terminal 200 to transmit a Resource request (uplink resource allocation request signal) instead of transmitting the Trigger frame prompting random access.

The NFRP Trigger frame can cause up to 18 terminals per 20 MHz to transmit Null Data Packets (NDP) that are orthogonal in tone units.

Allowance of preemption in the gap between DL PPDUs transmitted by AP 100 may be performed using a Resource request limited to uplink allocation request for LL traffic, for example. AP 100 can reduce the collision of the uplink signals between terminals 200 having LL traffic by allocating orthogonal uplink resources to terminals 200 from which the Resource request has been received.

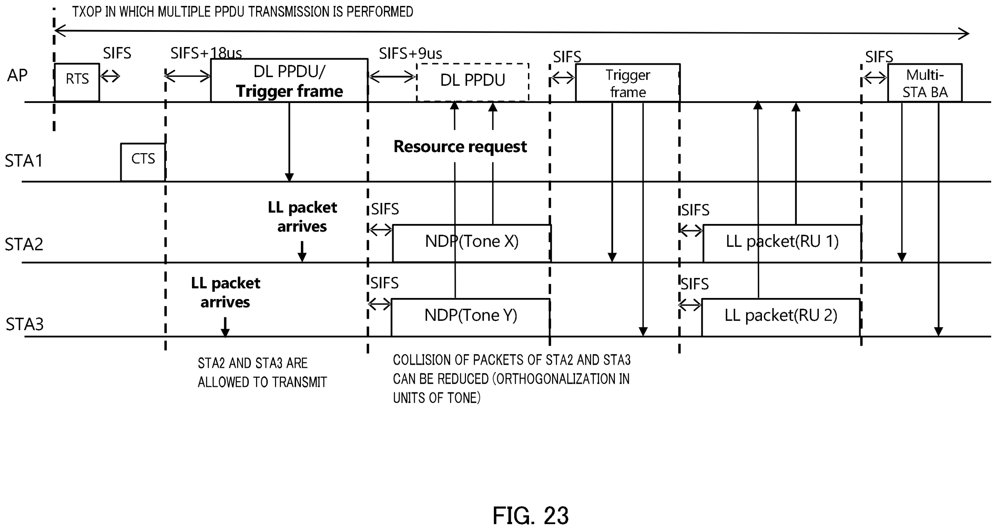

For example, as illustrated in FIG. 23, AP 100 (AP in FIG. 23) transmits, as a DL PPDU, an NFRP Trigger frame prompting terminals to transmit a Resource request limited to the uplink allocation request for LL traffic. In addition, for the PPDU transmission gap, a value (in FIG. 23, SIFS + 9 µs) greater than the carrier sensing time (in FIG. 23, SIFS) of the response signal (Resource request signal) for the Trigger frame is configured. Note that, as in the example of FIG. 3, the PPDU transmission gap before the first DL PPDU may be set to SIFS (that is, preemption may be possible in the gaps before the second and subsequent DL PPDUs).

Terminals 200 (STA2 and STA3 in FIG. 23) having LL traffic select predetermined tone numbers (in FIG. 23, Tone X for STA2 and Tone Y for STA3) obtained from terminal IDs (for example, AIDs) as transmission resources, configure the carrier sensing time to SIFS, and transmit, to AP 100, uplink signals (NDP) indicating the Resource request for LL traffic by using the selected tone numbers, when the carrier sensing result indicates an idle state.

When receiving the Resource request for LL traffic from terminals 200 (STA2 and STA3 in FIG. 23), AP 100 (AP in FIG. 23) transmits a Trigger frame that causes STA2 and STA3 to transmit uplink signals on different RUs (for example, RU1 or RU2).

Terminals 200 (STA2 and STA3 in FIG. 23) transmit uplink signals having LL traffic using the RUs based on the Trigger frame from AP 100. This enables STA2 and STA3 to transmit the uplink signals using different RUs.

As described above, by allowing the preemption of the Resource request signal limited to LL traffic in the PPDU transmission gap, the collision of the uplink signals between terminals having LL traffic can be avoided.

The embodiments of the present disclosure have been described above.

Note that, in each of the above-described embodiments, the carrier sensing time performed by terminal 200 before preemption transmission is not limited to SIFS + 9 µs × N (N is a positive integer). For example, as the carrier sensing time performed by terminal 200 before preemption transmission, an existing defined predetermined time duration (xIFS) such as SIFS, PIFS, or DIFS may be used. In addition, as the carrier sensing time performed by terminal 200 before preemption transmission, a constant defined in the specification, such as a slot time or aSlotTime, may be used instead of 9 µs.

In addition, in each of the above-described embodiments, as the allowable delay time (delay budget) of the transmission packet becomes smaller, the time duration of carrier sensing performed by terminal 200 before preemption transmission may be configured to be shorter. For example, when the delay budget is X µs or less, the time duration of the carrier sensing may be configured to be SIFS, and when the delay budget is Y µs (X < Y) or less, the time duration of the carrier sensing may be configured to be SIFS + 9 µs.

In addition, the time duration of carrier sensing performed by terminal 200 before preemption transmission may be configured to be shorter as the backoff counter becomes smaller.

In addition, in each of the above-described embodiments, the indication of the preemption control information is not limited to the indication by the preamble and the Trigger frame, and may be, for example, the indication by a MAC header (for example, a new A-Control field may be defined).

In addition, in each of the above-described embodiments, the presence or absence of Ack/BA immediately after a PPDU may be indicated by Ack Policy included in the QoS Control of the MAC header. For example, the "No ack" of the Ack Policy indicator may indicate the absence of Ack/BA, and the "Implicit BA" may indicate the presence of Ack/BA.

In addition, in each of the above-described embodiments, the start point of the carrier sensing time performed before the preemption transmission may be defined as follows:
(1) When Ack/BA is requested immediately after a PPDU (for example, in the following cases), the end timing of the PPDU including the Ack/BA is used as the start point (same as in FIG. 17).
   - QoS Data with individual addressing where Ack Policy is immediate Ack
   - Action frame where Ack Policy is other than Action No Ack
(2) When no Ack/BA is requested immediately after a PPDU (for example, in the following cases), the end timing of the PPDU including the Ack Policy is used as the start point (same as in FIG. 4).
   - QoS Data where Ack Policy is No Ack
   - Action No Ack frame where Ack Policy is Action No Ack

In addition, in each of the above-described embodiments, when the condition for allowing preemption transmission is satisfied, terminal 200 may transmit the uplink signal regardless of the state of the Network Allocation Vector (NAV) (ignoring the NAV).

In addition, in each of the above-described embodiments, LL traffic has been described as an example of the predetermined type for which preemption is allowed, but the type for which preemption is allowed is not limited to LL traffic, and may be another type of traffic.

In addition, in each of the above-described embodiments, the field (or the subfield) used for the indication of the control information (for example, including the preemption control information) is merely an example, and another field or subfield may be used. In addition, the number of bits used for the indication of the control information in each field or subfield is merely an example, and another number of bits may be used.

In addition, the format of the signal described in each of the above embodiments is merely an example, and another configuration may be employed in which at least one of the addition of another field and the deletion of one or some of the fields is performed, or another configuration may be employed in which at least one of the addition of another subfield and the deletion of one or some of the subfields is performed in any of the above-described fields.

Furthermore, in each embodiment described above, a case based on the format defined in IEEE 802.11 has been described as an example, but the format to which an embodiment of the present disclosure is applied is not limited to the format of IEEE 802.11.

The present disclosure can be realized by software, hardware, or software in cooperation with hardware. Each functional block used in the description of each embodiment described above can be partly or entirely realized by an LSI such as an integrated circuit, and each process described in each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter. The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)."

The communication may include exchanging data through, for example, a cellular system, a radio LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as, e.g., a base station, an access point, and any other apparatus, device or system that communicates with or controls apparatuses such as those in the above non-limiting examples.

A terminal according to an embodiment of the present disclosure includes: control circuitry, which, in operation, determines a carrier sensing time for performing carrier sensing in a predetermined time interval, based on a predetermined rule; and transmission circuitry, which, in operation, transmits a signal of a predetermined type based on a result of the carrier sensing.

In the embodiment of the present disclosure, the predetermined type is a type for which low latency is required.

In the embodiment of the present disclosure, the predetermined type is event-based latency traffic.

In the embodiment of the present disclosure, the control circuitry determines the carrier sensing time based on a time duration configured by an access point.

In the embodiment of the present disclosure, the control circuitry determines any one of a plurality of candidates for the carrier sensing time.

In the embodiment of the present disclosure, the carrier sensing time is different between a plurality of terminals that are allowed to transmit the signal, according to the predetermined rule.

In the embodiment of the present disclosure, the carrier sensing time is shorter than a time duration until an access point transmits a next signal, according to the predetermined rule.

In the embodiment of the present disclosure, the carrier sensing time of a terminal that is a relay destination of the signal is shorter than the carrier sensing time of a terminal that is a relay source of the signal, according to the predetermined rule.

In the embodiment of the present disclosure, the predetermined time interval is a time interval from when an access point transmits a first signal to when the access point transmits a second signal within a transmission opportunity of the access point.

In the embodiment of the present disclosure, the predetermined time interval is a time interval from when an access point receives a response signal for a first signal to when the access point transmits a second signal within a transmission opportunity of the access point.

In the embodiment of the present disclosure, the predetermined time interval is a Restricted - Target Wake Time Service Period (R-TWT SP).

In the embodiment of the present disclosure, the control circuitry determines that transmission of the signal is allowed, regardless of a backoff counter, in a case where the result of the carrier sensing indicates an idle state.

In the embodiment of the present disclosure, a fixed value is configured as the carrier sensing time for a plurality of terminals, the control circuitry determines any one resource from a plurality of candidates for a frequency resource, and the transmission circuitry transmits the signal using the determined resource.

In the embodiment of the present disclosure, the plurality of candidates is a plurality of resource units for random access, and the control circuitry randomly selects one resource unit from the plurality of resource units regardless of a counter for random access transmission.

An access point according to an embodiment of the present disclosure includes: control circuitry, which, in operation, determines a carrier sensing time for performing carrier sensing in a predetermined time interval, based on a predetermined rule; and reception circuitry, which, in operation, receives a signal of a predetermined type transmitted according to a result of the carrier sensing.

In a communication method according to an embodiment of the present disclosure, a terminal determines a carrier sensing time for performing carrier sensing in a predetermined time interval, based on a predetermined rule, and transmits a signal of a predetermined type based on a result of the carrier sensing.

In a communication method according to an embodiment of the present disclosure, an access point determines a carrier sensing time for performing carrier sensing in a predetermined time interval, based on a predetermined rule, and receives a signal of a predetermined type transmitted according to a result of the carrier sensing.

The disclosure of Japanese Patent Application No. 2023-102501, filed on June 22, 2023, including the specification, drawings and abstract, is incorporated herein by reference in its entirety.

### Industrial Applicability

An exemplary embodiment of the present disclosure is useful for radio communication systems.

### Reference Signs List

100, 300, 400 AP
101, 208 Scheduler
102, 207 Data generator
103, 209 Error correction encoder
104, 210 Modulator
105, 211 Preamble generator
106, 212 PPDU generator
107, 201 Radio transceiver
108, 202 Separator
109, 203 Preamble receiver
110, 204 Demodulator
111, 205 Error correction decoder
200, 500 Terminal
206 Preemption controller

## Claims

1. A terminal, comprising:
control circuitry, which, in operation, determines a carrier sensing time for performing carrier sensing in a predetermined time interval, based on a predetermined rule; and
transmission circuitry, which, in operation, transmits a signal of a predetermined type based on a result of the carrier sensing.

2. The terminal according to claim 1, wherein
the predetermined type is a type for which low latency is required.

3. The terminal according to claim 1, wherein
the predetermined type is event-based low latency traffic.

4. The terminal according to claim 1, wherein
the control circuitry determines the carrier sensing time based on a time duration configured by an access point.

5. The terminal according to claim 1, wherein
the control circuitry determines any one of a plurality of candidates for the carrier sensing time.

6. The terminal according to claim 1, wherein
the carrier sensing time is different between a plurality of terminals that are allowed to transmit the signal, according to the predetermined rule.

7. The terminal according to claim 1, wherein
the carrier sensing time is shorter than a time duration until an access point transmits a next signal, according to the predetermined rule.

8. The terminal according to claim 1, wherein
the carrier sensing time of a terminal that is a relay destination of the signal is shorter than the carrier sensing time of a terminal that is a relay source of the signal, according to the predetermined rule.

9. The terminal according to claim 1, wherein
the predetermined time interval is a time interval from when an access point transmits a first signal to when the access point transmits a second signal within a transmission opportunity of the access point.

10. The terminal according to claim 1, wherein
the predetermined time interval is a time interval from when an access point receives a response signal for a first signal to when the access point transmits a second signal within a transmission opportunity of the access point.

11. The terminal according to claim 1, wherein
the predetermined time interval is a Restricted - Target Wake Time Service Period (R-TWT SP).

12. The terminal according to claim 1, wherein
the control circuitry determines that transmission of the signal is allowed, regardless of a backoff counter, in a case where the result of the carrier sensing indicates an idle state.

13. The terminal according to claim 1, wherein
a fixed value is configured as the carrier sensing time for a plurality of terminals,
the control circuitry determines any one resource from a plurality of candidates for a frequency resource, and
the transmission circuitry transmits the signal using the determined resource.

14. The terminal according to claim 13, wherein
the plurality of candidates is a plurality of resource units for random access, and
the control circuitry randomly selects one resource unit from the plurality of resource units regardless of a counter for random access transmission.

15. An access point, comprising:
control circuitry, which, in operation, determines a carrier sensing time for performing carrier sensing in a predetermined time interval, based on a predetermined rule; and
reception circuitry, which, in operation, receives a signal of a predetermined type transmitted according to a result of the carrier sensing.

16. A communication method, comprising:
determining, by a terminal, a carrier sensing time for performing carrier sensing in a predetermined time interval, based on a predetermined rule; and
transmitting, by the terminal, a signal of a predetermined type based on a result of the carrier sensing.

17. A communication method, comprising:
determining, by an access point, a carrier sensing time for performing carrier sensing in a predetermined time interval, based on a predetermined rule; and
receiving, by the access point, a signal of a predetermined type transmitted according to a result of the carrier sensing.
